# EUROPÄISCHE PATENTSCHRIFT

(11) **EP 3 386 608 B1**
(45) Veröffentlichungstag und Bekanntmachung des Hinweises auf die Patenterteilung: **18.03.2020**
(21) Anmeldenummer: 16809359.9
(22) Anmeldetag: 07.12.2016
(51) Int. Cl.: B01D 53/14, B01D 53/86, C01B 17/04, C10L 3/10

(54) **VERFAHREN UND ANLAGE ZUR SAUERGASANREICHERUNG**
METHOD AND INSTALLATION FOR ACID GAS ENRICHMENT
PROCEDE ET INSTALLATION D'ENRICHISSEMENT DE GAZ ACIDE

(30) Priorität: 09.12.2015 EP 15198708
(43) Veröffentlichungstag der Anmeldung: 17.10.2018
(73) Patentinhaber: BASF SE, 67056 Ludwigshafen am Rhein (DE)
(72) Erfinder: INGRAM, Thomas, 67056 Ludwigshafen (DE); VORBERG, Gerald, 67056 Ludwigshafen (DE); SIEDER, Georg, 67056 Ludwigshafen (DE)
(74) Vertreter: Reitstötter Kinzebach
(86) Internationale Anmeldenummer: PCT/EP2016/080121
(87) Internationale Veröffentlichungsnummer: WO 2017/097851

(56) Entgegenhaltungen:
- WO-A1-2005/075056
- WO-A1-2010/086334
- WO-A1-2010/130787
- US-A- 4 498 911
- US-A- 5 820 837
- US-A1- 2006 150 812
- US-A1- 2008 107 581

## Beschreibung

Die vorliegende Erfindung betrifft ein Verfahren und eine Anlage zur Behandlung eines H₂S und CO₂ enthaltenden kohlenwasserstoffhaltigen Fluidstroms mit Sauergasanreicherung und Schwefelrückgewinnung in einer Claus-Anlage.

Die Entfernung von Sauergasen, wie z. B. CO₂, H₂S, SO₂, CS₂, HCN, COS oder Merkaptanen, aus Fluidströmen wie Erdgas, Raffineriegas oder Synthesegas, ist aus unterschiedlichen Gründen von Bedeutung. Der Gehalt an Schwefelverbindungen von Erdgas muss durch geeignete Aufbereitungsmaßnahmen unmittelbar an der Erdgasquelle reduziert werden, denn die Schwefelverbindungen bilden in dem vom Erdgas häufig mitgeführten Wasser Säuren, die korrosiv wirken. Für den Transport des Erdgases in einer Pipeline oder die Weiterverarbeitung in einer Erdgasverflüssigungsanlage (LNG = liquefied natural gas) müssen daher vorgegebene Grenzwerte der schwefelhaltigen Verunreinigungen eingehalten werden. Darüber hinaus sind zahlreiche Schwefelverbindungen bereits in niedrigen Konzentrationen übel riechend und toxisch.

Kohlendioxid muss unter anderem aus Erdgas entfernt werden, weil eine hohe Konzentration an CO₂ den Brennwert des Gases reduziert. Außerdem kann CO₂ in Verbindung mit Feuchtigkeit, die in den Fluidströmen häufig mitgeführt wird, zu Korrosion an Leitungen und Armaturen führen. Wird Erdgas für den Transport zu Flüssigerdgas (LNG = Liquid Natural Gas) verflüssigt, muss das CO₂ zuvor weitgehend entfernt werden. Bei der Temperatur des Flüssigerdgases (etwa -162 °C) würde das CO₂ resublimieren und Anlagenteile beschädigen. Andererseits kann eine zu geringe Konzentration an CO₂ ebenfalls unerwünscht sein, z. B. bei der Einspeisung in das Erdgasnetz, da dadurch der Brennwert des Gases zu hoch sein kann.

Zur Entfernung von Sauergasen werden Wäschen mit wässrigen Lösungen anorganischer oder organischer Basen eingesetzt. Beim Lösen von Sauergasen in dem Absorptionsmittel bilden sich mit den Basen Ionen. Das Absorptionsmittel kann durch Entspannen auf einen niedrigeren Druck und/oder Strippen regeneriert werden, wobei die ionischen Spezies zu Sauergasen zurück reagieren und/oder mittels Dampf abgestrippt werden. Nach dem Regenerationsprozess kann das Absorptionsmittel wiederverwendet werden.

Ein Verfahren, bei dem alle sauren Gase, insbesondere CO₂ und H₂S, weitestgehend entfernt werden, wird als "Totalabsorption" bezeichnet. In bestimmten Fällen kann es dagegen wünschenswert sein, bevorzugt H₂S vor CO₂ zu absorbieren, z. B. um ein Brennwert-optimiertes H₂S/CO₂-Verhältnis für eine nachgeschaltete Claus-Anlage zu erhalten. In diesem Fall spricht man von einer "selektiven Wäsche". Ein ungünstiges H₂S/CO₂-Verhältnis kann die Leistung und Effizienz der Claus-Anlage durch einen zu geringen Heizwert beeinträchtigen. Der Claus-Prozess benötigt üblicherweise einen H₂S-Mindestgehalt von 30 Vol.-%. Um die Claus-Anlage bei niedrigen H₂S/CO₂-Verhältnissen zu betreiben, müssen aufwändigere Verfahrensvarianten verwendet werden. Beispielsweise kann eine Split-Flow-Konfiguration gewählt werden, der Sauerstoffgehalt im Fluidstrom erhöht werden oder Schwefel in den Brenner der Claus-Anlage zurückgeführt werden.

Durch Wahl und Einsatz eines selektiven Absorptionsmittels lässt sich eine recht gute Selektivität der Entfernung von Schwefelwasserstoff gegenüber Kohlendioxid erzielen. Diese Selektivität reicht jedoch nicht aus, wenn ein ungünstiges Verhältnis von Schwefelwasserstoff zu Kohlendioxid im Einsatzgas zu einem Sauergas mit einem so geringen Gehalt an Schwefelkomponenten führt, dass das Sauergas nicht mehr in einer Claus-Anlage verarbeitet werden kann.

Um ein derartig "verdünntes" Sauergas in einer Claus-Anlage zu verarbeiten, sind daher zusätzliche Maßnahmen notwendig. In der Regel erfolgt die Aufkonzentration der Schwefelkomponenten dadurch, dass die im niedrig konzentrierten Sauergas enthaltenen Schwefelkomponenten mittels einer zweiten Absorptionskolonne mit regenerierter Absorptionslösung noch einmal entfernt werden, wobei aufgrund der bereits besseren Verhältnisse von Schwefelwasserstoff gegenüber Kohlendioxid im Sauergas aus der ersten Absorptionsstufe eine entsprechend höhere Konzentration von Schwefelkomponenten im Sauergas der zweiten Absorptionsstufe erzielt wird.

Die WO 2005/075056 A1 beschreibt ein Verfahren zum Entfernen von Sauergasen aus einem kohlenwasserstoffhaltigen Fluidstrom unter Verwendung eines H₂S-selektiven Absorptionsmittels. Ein erstes beladenes Absorptionsmittel wird in einer Desorptionskolonne regeneriert. Ein Teilstrom des aus der Desorptionskolonne ausgeführten Gasstroms wird mit frischem Absorptionsmittel behandelt und der zweite H₂S-beladene Absorptionsmittelstrom wird mit dem ersten H₂S-beladenen Absorptionsmittelstrom kombiniert. Der H₂S-Gehalt des aus der Desorptionskolonne ausgeführten Gasstroms wird so erhöht und ein Teilstrom kann einer Claus-Anlage zugeführt werden.

Die US 5,820,837 beschreibt ein Verfahren zum Entfernen von Sauergasen aus einem kohlenwasserstoffhaltigen Fluidstrom unter Verwendung eines H₂S-selektiven Absorptionsmittels. Das beladene Absorptionsmittel wird in einem Hochdruck-Entspannungsbehälter und anschließend einem Niederdruck-Entspannungsbehälter teilweise regeneriert, bevor es in eine Desorptionskolonne gespeist wird. Das aus dem Niederdruck-Entspannungsbehälter erhaltene, CO₂-angereicherte Gas wird in einem Absorber erneut mit frischem Absorptionsmittel behandelt, wodurch der H₂S-Gehalt des aus der Desorptionskolonne ausgeführten Gasstroms erhöht wird und einer Claus-Anlage zugeführt werden kann.

Die US 2006/0150812 beschreibt ebenfalls ein Verfahren zum Entfernen von Sauergasen aus einem kohlenwasserstoffhaltigen Fluidstrom unter Verwendung eines H₂S-selektiven Absorptionsmittels. Das beladene Absorptionsmittel wird in einem Entspannungsbehälter teilweise regeneriert, bevor es in eine Desorptionskolonne gespeist wird. Das aus dem Entspannungsbehälter erhaltene, CO₂-angereicherte Gas wird in einem weiteren Absorber behandelt, wodurch der H₂S-Gehalt des aus der Desorptionskolonne ausgeführten Gasstroms erhöht wird und einer Claus-Anlage zugeführt werden kann.

Diese Vorgehensweisen sind jedoch energie- und investitionskostenaufwendig.

Der Erfindung liegt die Aufgabe zu Grunde, ein eingangs genanntes Verfahren, dessen Energiebedarf optimiert ist, sowie eine zur Durchführung des Verfahrens geeignete Anlage anzugeben.

Die Aufgabe wird gelöst durch ein Verfahren zur Behandlung eines H₂S und CO₂ enthaltenden kohlenwasserstoffhaltigen Fluidstroms, bei dem man
a) den Fluidstrom in einem ersten Absorber bei einem Druck von 10 bis 150 bar mit einem ersten Teilstrom eines regenerierten H₂S-selektiven Absorptionsmittels behandelt, wobei man einen behandelten Fluidstrom und ein H₂S-beladenes Absorptionsmittel erhält;
b) das H₂S-beladene Absorptionsmittel durch indirekten Wärmetausch mit regeneriertem H₂S-selektiven Absorptionsmittel erwärmt;
c) das erwärmte H₂S-beladene Absorptionsmittel in einem Niederdruck-Entspannungsbehälter auf einen Druck von 1,2 bis 10 bar entspannt; wobei man ein erstes CO₂-reiches Abgas und ein teilregeneriertes Absorptionsmittel erhält;
d) das teilregenerierte Absorptionsmittel in einer Desorptionskolonne regeneriert, wobei man ein H₂S-reiches Abgas und regeneriertes Absorptionsmittel erhält;
e) das H₂S-reiche Abgas einer Claus-Einheit zuführt und das Abgas der Claus-Einheit einer Hydriereinheit zuführt, wobei man hydriertes Claus-Endgas erhält;
f) das hydrierte Claus-Endgas und das erste CO₂-reiche Abgas in einem zweiten Absorber bei einem Druck von 1 bis 4 bar mit einem zweiten Teilstrom des regenerierten H₂S-selektiven Absorptionsmittels behandelt, wobei man ein zweites CO₂-reiches Abgas und ein zweites H₂S-beladenes Absorptionsmittel erhält; und
g) das zweite H₂S-beladene Absorptionsmittel in den ersten Absorber leitet.

Die Erfindung betrifft außerdem eine Anlage zur Durchführung des obigen Verfahrens, umfassend
a) einen ersten Absorber, der über einen ersten Wärmetauscher flüssigkeitsleitend mit einer Desorptionskolonne verbunden ist, um einen ersten Teilstrom eines regenerierten H₂S-selektiven Absorptionsmittels aus der Desorptionskolonne aufzunehmen,
   wobei der erste Absorber ausgebildet ist, die Absorption von H₂S und CO₂ aus dem Fluidstrom in den ersten Teilstrom des regenerierten H₂S-selektiven Absorptionsmittels bei einem Druck von 10 bis 150 bar zu begünstigen, wobei man einen behandelten Fluidstrom und ein H₂S-beladenes Absorptionsmittel erhält;
   und der erste Wärmetauscher ausgebildet ist, das H₂S-beladene Absorptionsmittel durch indirekten Wärmetausch mit regeneriertem H₂S-selektiven Absorptionsmittel aus der Desorptionskolonne zu erwärmen;
b) einen Niederdruck-Entspannungsbehälter, der flüssigkeitsleitend mit dem ersten Wärmetauscher verbunden ist und ausgebildet ist, das erwärmte H₂S-beladene Absorptionsmittel auf einen Druck von 1,2 bis 10 bar zu entspannen; wobei man ein erstes CO₂-reiches Abgas und ein teilregeneriertes Absorptionsmittel erhält;
c) eine Leitung, die das teilregenerierte Absorptionsmittel in die Desorptionskolonne leitet, wobei man ein H₂S-reiches Abgas und regeneriertes Absorptionsmittel erhält;
d) eine Claus-Einheit, die das H₂S-reiche Abgas aufnimmt, und eine Hydriereinheit, die das Abgas der Claus-Einheit aufnimmt, wobei man hydriertes Claus-Endgas erhält;
e) einen zweiten Absorber, der flüssigkeitsleitend mit der Desorptionskolonne verbunden ist und ausgebildet ist, die Absorption von H₂S aus dem hydrierten Claus-Endgas und dem ersten CO₂-reichen Abgas in einen zweiten Teilstrom des regenerierten H₂S-selektiven Absorptionsmittels bei einem Druck von 1 bis 4 bar zu begünstigen, wobei man ein zweites CO₂-reiches Abgas und ein zweites H₂S-beladenes Absorptionsmittel erhält;
f) eine Leitung, die das zweite H₂S-beladene Absorptionsmittel in den ersten Absorber leitet.

Sofern nicht anders angegeben, gelten die nachfolgenden Erläuterungen und Bevorzugungen gleichermaßen für die das erfindungsgemäße Verfahren und die erfindungsgemäße Anlage.

Im Schritt a) wird ein H₂S-selektives Absorptionsmittel verwendet, um aus dem Fluidstrom H₂S zu absorbieren und CO₂ zu co-absorbieren. CO₂ wird im Schritt c) als erstes CO₂-reiches Abgas aus dem H₂S-beladenen Absorptionsmittel abgeflasht, nachdem das H₂S-beladene Absorptionsmittel gegen regeneriertes Absorptionsmittel erwärmt wurde. Auf diese Weise wird die relative H₂S-Konzentration des H₂S-beladenen Absorptionsmittels erhöht und das im Schritt d) anfallende H₂S-reiche Abgas weist eine Zusammensetzung auf, die direkt einer Claus-Anlage zugeführt werden kann.

Das Claus-Endgas und das erste CO₂-reichen Abgas weisen H₂S-Restkonzentrationen auf, die nicht unmittelbar in die Umgebung entlassen werden können. Im erfindungsgemäßen Verfahren werden das hydrierte Claus-Endgas und das erste CO₂-reiche Abgas gemeinsam in einem zweiten Absorber mit frischem Absorptionsmittel behandelt. Da die Absorptionskapazität des Absorptionsmittels nach dessen Einsatz im zweiten Absorber nicht erschöpft ist, leitet man das zweite H₂S-beladene Absorptionsmittel in den ersten Absorber, um die Absorptionskapazität auszuschöpfen. Es wurde gefunden, dass das Verfahren bei gleicher Trennaufgabe eine niedrigere Regenerationsenergie und ein niedrigere Gesamtumlaufrate des Absorptionsmittels bedingt, als Verfahren mit getrennter Behandlung des hydrierten Claus-Endgases.

Während die Sauergasentfernung im ersten Absorber bei hohem Druck erfolgt, findet die Sauergasanreicherung im zweiten Absorber bei einem niedrigeren Druck statt. Da die H₂S-Selektivität eines Absorptionsmittels bei niedrigem Druck (und gleicher Temperatur) in der Regel größer ist, wird eine hohe Abtrennung von sowohl H₂S als auch CO₂ aus dem zu behandelnden Fluidstrom im ersten Absorber und eine hochselektive Abtrennung von H₂S aus dem im zweiten Absorber behandelten Gas ermöglicht.

Vorzugsweise beträgt die kumulierte CO₂- und H₂S-Beladung des beladenen Absorptionsmittels nach der Behandlung des Fluidstroms im ersten Absorber wenigstens 0,20 mol/mol, besonders bevorzugt wenigstens 0,25 mol/mol, ausgedrückt als Summe der Stoffmengen an im Absorptionsmittel gelöstem CO₂ und H₂S pro Stoffmenge der Komponenten des Absorptionsmittels, welche mit CO₂ und H₂S reagieren (beispielsweise aminische Komponenten).

Erfindungsgemäß wird ein H₂S-selektives Absorptionsmittel verwendet. Als H₂S-selektive Absorptionsmittel können sowohl chemisch wirkende Absorptionsmittel, wie z. B. selektive Amine, als auch physikalische Absorptionsmittel, wie z.B. Selexol, Pursiol, Genosorb oder Morphysorb, genutzt werden. Chemisch wirkende Absorptionsmittel sind bevorzugt.

Als chemisch wirkende H₂S-selektive Absorptionsmittel werden üblicherweise Lösungen, insbesondere wässrige Lösungen, von wenigstens einem unter tertiären Aminen und sterisch gehinderten Aminen ausgewähltem Amin verwendet. Tertiäre Amine und sterisch gehinderte Amine zeigen kinetische Selektivität für H₂S gegenüber CO₂. Diese Amine reagieren nicht direkt mit CO₂; vielmehr wird CO₂ in einer langsamen Reaktion mit dem Amin und mit Wasser zu ionischen Produkten umgesetzt - im Gegensatz dazu reagiert H₂S in wässrigen Aminlösungen sofort.

In einer Ausführungsform enthält die wässrige Lösung wenigstens ein mit Wasser mischbares organisches Lösungsmittel. Dabei kann es wünschenswert sein, den Wassergehalt des Absorptionsmittels zu begrenzen, z. B. auf maximal 40 Gew.-% oder maximal 30 Gew.-% oder maximal 20 Gew.-% oder maximal 10 Gew.-% oder maximal 5 Gew.-%, bezogen auf das Gewicht des Absorptionsmittels.

Das organische Lösungsmittel ist bevorzugt ausgewählt unter
C₄-C₁₀-Alkoholen, wie n-Butanol, n-Pentanol und n-Hexanol;
Ketonen, wie Cyclohexanon;
Estern, wie Essigsäureethylester und Essigsäurebutylester;
Lactonen, wie γ-Butyrolacton, δ-Valerolacton und ε-Caprolacton;
Amiden, wie tertiären Carbonsäureamiden, beispielsweise N,N-Dimethylformamid; oder N-Formylmorpholin und N-Acetylmorpholin;
Lactamen, wie γ-Butyrolactam, δ-Valerolactam und ε-Caprolactam und N-Methyl-2-pyrrolidon (NMP);
Sulfonen, wie Sulfolan;
Sulfoxiden, wie Dimethylsulfoxid (DMSO);
Diolen, beispielsweise Glycolen, wie Ethylenglycol (EG) und Propylenglycol;
Polyalkylenglycolen, wie Diethylenglycol (DEG) und Triethylenglycol (TEG);
Di- oder Mono-(C₁₋₄-Alkylether)-glycolen, wie Ethylenglycoldimethylether;
Di- oder Mono-(C₁₋₄-Alkylether)-polyalkylenglycolen, wie Diethylenglycoldimethylether, Dipropylenglycolmonomethylether und Triethylenglycoldimethylether;
cyclischen Harnstoffen, wie N,N-Dimethylimidazolidin-2-on und Dimethylpropylenharnstoff (DMPU);
Thioalkanolen, wie Ethylendithioethanol, Thiodiethylenglycol (Thiodiglycol, TDG) und Methylthioethanol;
und Gemischen davon.

Besonders bevorzugt ist das organische Lösungsmittel ausgewählt unter Sulfonen, Diolen, Di- oder Mono-(C₁₋₄-Alkylether)-polyalkylenglycolen und Polyalkylenglycolen. Ganz besonders bevorzugt ist das organische Lösungsmittel ausgewählt unter Sulfonen. Ein bevorzugtes organisches Lösungsmittel ist Sulfolan.

Unter einem "tertiären Amin" werden Verbindungen mit wenigstens einer tertiären Aminogruppe verstanden. Unter einem tertiären Amin wird eine Verbindung mit einem Stickstoffatom, welches mit drei von Wasserstoff verschiedenen organischen Resten substituiert ist, verstanden. Das tertiäre Amin enthält vorzugsweise ausschließlich tertiäre Aminogruppen, d. h. es enthält neben wenigstens einer tertiären Aminogruppe keine primären oder sekundären Aminogruppen. Das tertiäre Amin verfügt vorzugsweise nicht über saure Gruppen, wie insbesondere Phosphonsäure-, Sulfonsäure- und/oder Carbonsäuregruppen.

Zu den geeigneten tertiären Aminen zählen insbesondere:

### 1. Tertiäre Alkanolamine wie

Bis(2-hydroxyethyl)-methylamin (Methyldiethanolamin, MDEA), Tris(2-hydroxyethyl)amin (Triethanolamin, TEA), Tributanolamin, 2-Diethylaminoethanol (Diethylethanolamin, DEEA), 2-Dimethylaminoethanol (Dimethylethanolamin, DMEA), 3-Dimethylamino-1-propanol (N,N-Dimethylpropanolamin), 3-Diethylamino-1-propanol, 2-Diisopropylaminoethanol (DIEA), N,N-Bis(2-hydroxypropyl)methylamin (Methyldiisopropanolamin, MDIPA);

### 2. Tertiäre Aminoether wie

3-Methoxypropyldimethylamin;

### 3. Tertiäre Polyamine, z. B. bistertiäre Diamine wie

N,N,N',N'-Tetramethylethylendiamin, N,N-Diethyl-N',N'-dimethylethylendiamin, N,N,N',N'-Tetraethylethylendiamin, N,N,N',N'-Tetramethyl-1,3-propandiamin (TMPDA), N,N,N',N'-Tetraethyl-1,3-propandiamin (TEPDA), N,N,N',N'-Tetramethyl-1,6-hexandiamin, N,N-Dimethyl-N',N'-diethylethylendiamin (DMDEEDA), 1-Dimethylamino-2-dimethylaminoethoxyethan (Bis[2-(dimethylamino)ethyl]ether), 1,4-Diazabicyclo[2.2.2]octan (TEDA), Tetramethyl-1,6-hexandiamin;
und Gemische davon.

Tertiäre Alkanolamine, d. h. Amine mit wenigstens einer an das Stickstoffatom gebundenen Hydroxyalkylgruppe, sind im Allgemeinen bevorzugt. Besonders bevorzugt ist Methyldiethanolamin (MDEA).

Geeignete sterisch gehinderte Amine umfassen sterisch gehinderte sekundäre Amine und sterisch gehinderte primäre Amine. Bevorzugt sind sterisch gehinderte sekundäre Amine.

Unter einer sterischen Hinderung wird bei sekundären Aminogruppen die Anwesenheit mindestens eines sekundären oder tertiären Kohlenstoffatoms in unmittelbarer Nachbarschaft zum Stickstoffatom der Aminogruppe verstanden. Unter einer sterischen Hinderung wird bei primären Aminogruppen die Anwesenheit mindestens eines tertiären Kohlfenstoffatoms in unmittelbarer Nachbarschaft zum Stickstoffatom der Aminogruppe verstanden. Geeignete sterisch gehinderte Amine umfassen auch Verbindungen, die im Stand der Technik als stark sterisch gehinderte Amine bezeichnet werden und einen sterischen Parameter (Taft-Konstante) E_{S} von mehr als 1,75 aufweisen.

Unter einem sekundären Kohlenstoffatom wird ein Kohlenstoffatom, welches außer der Bindung zur sterisch gehinderten Position zwei Kohlenstoff-Kohlenstoff-Bindungen aufweist, verstanden. Unter einem tertiären Kohlenstoffatom wird ein Kohlenstoffatom, welches außer der Bindung zur sterisch gehinderten Position drei Kohlenstoff-Kohlenstoff-Bindungen aufweist, verstanden. Unter einem sekundären Amin wird eine Verbindung mit einem Stickstoffatom, welches mit zwei von Wasserstoff verschiedenen organischen Resten substituiert ist, verstanden. Unter einem primären Amin wird eine Verbindung mit einem Stickstoffatom, welches mit einem von Wasserstoff verschiedenen organischen Rest substituiert ist, verstanden.

Bevorzugt umfasst das sterisch gehinderte Amin eine Isopropylaminogruppe, eine tert-Butylaminogruppe oder eine 2,2,6,6-Tetramethylpiperidinylgruppe.

Geeignete sterisch gehinderte primäre Amine umfassen 2-Amino-2-methylpropanol (2-AMP), 2-Amino-2-ethylpropanol, 2-Amino-2-propylpropanol und 2-(2-Amino-2-methylpropoxy)ethanol.

Geeignete sterisch gehinderte sekundäre Amine umfassen 2-(tert-Butylamino)ethanol, 2-(Isopropylamino)-1-ethanol, 2-(Isopropylamino)-1-propanol, 2-(2-tert-Butylamino-ethoxy)ethanol (TBAEE), 2-(2-Isopropylaminoethoxy)ethanol (IPAEE), 2-(2-(2-tert-Butylaminoethoxy)ethoxy)ethanol, 2-(2-(2-Isopropylaminoethoxy)ethoxy)ethanol, 2-Methylamino-2-methylpropanol, 4-Hydroxy-2,2,6,6-tetramethylpiperidin, 4-(3'-Hydroxypropoxy)-2,2,6,6-tetramethylpiperidin, 4-(4'-Hydroxybutoxy)-2,2,6,6-tetramethylpiperidin, (2-(2-(2-tert-Butylaminoethoxy)ethoxy)ethyl)methylether (M3ETB), Bis-(2-(tert-butylamino)ethyl)ether, Bis-(2-(isopropylamino)ethyl)ether, 2-(2-(2-tert-Butylaminoethoxy)ethoxy)ethyl-tert-butylamin, 2-(2-(2-Isopropylaminoethoxy)ethoxy)-ethyl-isopropylamin, 2-(2-(2-(2-tert-Butylaminoethoxy)ethoxy)ethoxy)ethyl-tert-butylamin, 2-(2-(2-(2-Isopropylaminoethoxy)ethoxy)ethoxy)ethyl-isopropylamin, 4-(Di-(2-hydroxyethyl)amino)-2,2,6,6-tetramethylpiperidin und Gemische davon.

Ganz besonders bevorzugt ist das sterisch gehinderte sekundäre Amin ausgewählt unter 2-(2-Isopropylaminoethoxy)ethanol (IPAEE), 2-(2-tert-Butylaminoethoxy)ethanol (TBAEE), 2-(2-(2-tert-Butylaminoethoxy)ethoxy)ethyl-tert-butylamin, 2-(2-(2-Isopropyl-aminoethoxy)ethoxy)ethyl-isopropylamin, 2-(2-(2-(2-tert-Butylaminoethoxy)ethoxy)-ethoxy)ethyl-tert-butylamin, 2-(2-(2-(2-Isopropylaminoethoxy)ethoxy)ethoxy)ethyl-isopropylamin und (2-(2-(2-tert-Butylaminoethoxy)ethoxy)ethyl)methylether (M3ETB). Am stärksten bevorzugt ist das sterisch gehinderte sekundäre Amin 2-(2-tert-Butylaminoethoxy)ethanol (TBAEE).

In einer Ausführungsform umfasst das Absorptionsmittel eine wässrige Lösung eines sterisch gehinderten Amins, bevorzugt eines sterisch gehinderten sekundären Amins, und eines tertiären Amins. Vorzugsweise umfasst das Absorptionsmittel eine wässrige Lösung von TBAEE und MDEA. Durch die Variation des molaren Verhältnisses von sterisch gehindertem Amin zu tertiärem Amin lässt sich die exotherme Wärmetönung der Reaktion des Absorptionsmittels mit Sauergasen sowie die H₂S-Selektivität des Absorptionsmittels beeinflussen.

Sterisch gehinderte Amine, wie beispielsweise TBAEE, weisen vielfach eine ausgeprägte Abhängigkeit der H₂S-Selektivität vom Druck auf. So kann durch Mitverwendung eines sterisch gehinderten Amins wie TBAEE in einem Absorptionsmittel ein hoher CO₂-Abtrennungsgrad bei gleichzeitig hohem H₂S-Abtrennungsgrad im ersten Absorber und eine hohe H₂S-Selektivität im zweiten Absorber erreicht werden. Die Verwendung von sterisch gehinderten Aminen wie TBAEE erlaubt bei niedrigen Partialdrücken an CO₂ und H₂S außerdem eine höhere Abtrennung an H₂S.

Im Allgemeinen beträgt die Gesamtkonzentration des sterisch gehinderten Amins und des tertiären Amins im Absorptionsmittel 10 bis 60 Gew.-%, bevorzugt 20 bis 50 Gew.-%, besonders bevorzugt 30 bis 50 Gew.-%.

Das molare Verhältnis des sterisch gehinderten Amins zum tertiären Amin ist bevorzugt größer als 0,05 und liegt beispielsweise im Bereich von 0,1 bis 0,9. Durch Variation des molaren Verhältnisses des sterisch gehinderten Amins zum tertiären Amin kann die H₂S-Selektivität den jeweiligen Anforderungen angepasst werden.

Bevorzugt enthält das Absorptionsmittel kein sterisch ungehindertes primäres oder sekundäres Amin. Verbindungen dieser Art wirken als starke Promotoren der CO₂-Absorption. Dadurch kann die H₂S-Selektivität des Absorptionsmittels verloren gehen. Unter einem sterisch ungehinderten primären oder sekundären Amin werden Verbindungen verstanden, die über primäre oder sekundäre Aminogruppen verfügen, an die lediglich Wasserstoffatome oder primäre Kohlenstoffatome gebunden sind.

In einer Ausführungsform umfasst das wässrige Absorptionsmittel eine Säure. Die Säure weist bevorzugt einen pKs-Wert von weniger als 6, insbesondere weniger als 5 auf. Bei Säuren mit mehreren Dissoziationsstufen und demzufolge mehreren pKs-Werten ist diese Erfordernis erfüllt, wenn einer der pKs-Werte im angegebenen Bereich liegt. Die Säure ist geeigneter Weise unter Protonensäuren (Brönstedt-Säuren) ausgewählt.

Die Menge an Säure beträgt in einer Ausführungsform 0,1 bis 5,0 Gew.-%, bevorzugt 0,2 bis 4,0 Gew.-%, besonders bevorzugt 0,3 bis 3,0 Gew.-% und am bevorzugtesten 0,4 bis 2,0 Gew.-%, bezogen auf das Gewicht des Absorptionsmittels.

Die Säure ist ausgewählt unter organischen und anorganischen Säuren. Geeignete organische Säuren umfassen beispielsweise Phosphonsäuren, Sulfonsäuren, Carbonsäuren und Aminosäuren. In bestimmten Ausführungsformen ist die Säure eine mehrbasische Säure.

### Geeignete Säuren sind beispielsweise

Mineralsäuren, wie Salzsäure, Schwefelsäure, Amidoschwefelsäure, Phosphorsäure, Partialester der Phosphorsäure, z. B. Mono- und Dialkyl- und -arylphosphate wie Tridecylphosphat, Dibutylphosphat, Diphenylphosphat und Bis-(2-ethylhexyl)phosphat; Borsäure;
Carbonsäuren, beispielsweise gesättigte aliphatische Monocarbonsäuren wie Ameisensäure, Essigsäure, Propionsäure, Buttersäure, Isobuttersäure, Valeriansäure, Isovaleriansäure, Pivalinsäure, Capronsäure, n-Heptansäure, Caprylsäure, 2-Ethylhexansäure, Pelargonsäure, Capronsäure, Neodecansäure, Undecansäure, Laurinsäure, Tridecansäure, Myristinsäure, Pentadecansäure, Palmitinsäure, Margarinsäure, Stearinsäure, Isostearinsäure, Arachinsäure, Behensäure; gesättigte aliphatische Polycarbonsäuren wie Oxalsäure, Malonsäure, Bernsteinsäure, Glutarsäure, Adipinsäure, Pimelinsäure, Korksäure, Azelainsäure, Sebacinsäure, Dodecandisäure; cycloaliphatische Mono- und Polycarbonsäuren wie Cyclohexancarbonsäure, Hexahydrophthalsäure, Tetrahydrophthalsäure, Harzsäuren, Naphthensäuren; aliphatische Hydroxycarbonsäuren wie Glykolsäure, Milchsäure, Mandelsäure, Hydroxybuttersäure, Weinsäure, Apfelsäure, Citronensäure; halogenierte aliphatische Carbonsäuren wie Trichloressigsäure oder 2-Chlorpropionsäure; aromatische Mono- und Polycarbonsäuren wie Benzoesäure, Salicylsäure, Gallussäure, die stellungsisomeren Tolylsäuren, Methoxybenzoesäuren, Chlorbenzoesäuren, Nitrobenzoesäuren, Phthalsäure, Terephthalsäure, Isophthalsäure; technische Carbonsäure-Gemische wie zum Beispiel Versatic-Säuren; Sulfonsäuren, wie Methylsulfonsäure, Butylsulfonsäure, 3-Hydroxypropylsulfonsäure, Sulfoessigsäure, Benzolsulfonsäure, p-Toluolsulfonsäure, p-Xylolsulfonsäure, 4-Dodecylbenzolsulfonsäure, 1-Naphtalinsulfonsäure, Dinonylnaphthalinsulfonsäure und Dinonylnaphthalin- disulfonsäure, Trifluormethyl- oder Nonafluor-n-butylsulfonsäure, Camphersulfonsäure, 2-(4-(2-Hydroxyethyl)-1 -piperazinyl)-ethansulfonsäure (HEPES);
organische Phosphonsäuren, beispielsweise Phosphonsäuren der Formel (I)

R¹-PO₃H (I)

worin R¹ für C₁₋₁₈-Alkyl steht, das gegebenenfalls durch bis zu vier Substituenten substituiert ist, die unabhängig ausgewählt sind unter Carboxy, Carboxamido, Hydroxy und Amino.

Hierzu zählen Alkylphosphonsäuren, wie Methylphosphonsäure, Propylphosphonsäure, 2-Methyl-propylphosphonsäure, t-Butylphosphonsäure, n-Butylphosphonsäure, 2,3-Dimethylbutylphosphonsäure, Octylphosphonsäure; Hydroxyalkylphosphonsäuren, wie Hydroxymethylphosphonsäure, 1-Hydroxyethylphosphonsäure, 2-Hydroxyethylphosphonsäure; Arylphosphonsäuren wie Phenylphosphonsäure, Toluylphosphonsäure, Xylylphosphonsäure, Aminoalkylphosphonsäuren wie Aminomethylphosphonsäure, 1-Aminoethylphosphonsäure, 1-Dimethylaminoethylphosphonsäure, 2-Aminoethylphosphonsäure, 2-(N-Methylamino)ethylphosphonsäure, 3-Aminopropylphosphonsäure, 2-Aminopropylphosphonsäure, 1-Aminopropylphosphonsäure, 1-Aminopropyl-2-chlorpropylphosphonsäure, 2-Aminobutylphosphonsäure, 3-Aminobutylphosphonsäure, 1-Aminobutylphosphonsäure, 4-Aminobutylphosphonsäure, 2-Aminopentylphosphonsäure, 5-Aminopentylphosphonsäure, 2-Aminohexylphosphonsäure, 5-Aminohexylphosphonsäure, 2-Aminooctylphosphonsäure, 1-Aminooctylphosphonsäure, 1-Aminobutylphosphonsäure; Amidoalkylphosphonsäuren wie 3-Hydroxymethylamino-3-oxopropylphosphonsäure; und Phosphonocarbonsäuren wie 2-Hydroxyphosphonoessigsäure und 2-Phosphonobutan-1,2,4-tricarbonsäure.;
Phosphonsäuren der Formel (II) 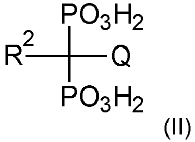 worin R² für H oder C₁₋₆-Alkyl steht, Q für H, OH oder NY₂ steht und Y für H oder CH₂PO₃H₂ steht, wie 1-Hydroxyethan-1,1-diphosphonsäure;
Phosphonsäuren der Formel (III) 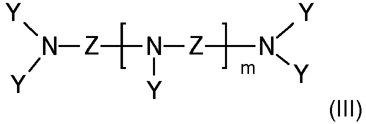 worin Z für C₂₋₆-Alkylen, Cycloalkandiyl, Phenylen, oder C₂₋₆-Alkylen, das durch Cycloalkandiyl oder Phenylen unterbrochen ist, steht, Y für CH₂PO₃H₂ steht und m für 0 bis 4 steht, wie Ethylendiamin-tetra(methylenphosphonsäure), Diethylentriaminpenta-(methylenphosphonsäure) und Bis(hexamethylen)triamin-penta(methylenphosphon-säure);
Phosphonsäuren der Formel (IV)

R³-NY₂ (IV)

worin R³ für C₁₋₆-Alkyl, C₂₋₆-Hydroxyalkyl oder Y steht und Y für CH₂PO₃H₂ steht, wie Nitrilo-tris(methylenphosphonsäure) und 2-Hydroxyethyliminobis(methylenphosphon-säure);
Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, wie
α-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie N,N-Dimethylglycin (Dimethylaminoessigsäure), N,N-Diethylglycin, Alanin (2-Aminopropionsäure), N-Methylalanin (2-(Methylamino)-propionsäure), N,N-Dimethylalanin, N-Ethylalanin, 2-Methylalanin (2-Aminoisobuttersäure), Leucin (2-Amino-4-methyl-pentan-1-säure), N-Methylleucin, N,N-Dimethyl-leucin, Isoleucin (1-Amino-2-methylpentansäure), N-Methylisoleucin, N,N-Dimethyl-isoleucin, Valin (2-Aminoisovaleriansäure), α-Methylvalin (2-Amino-2-methyl-isovaleriansäure), N-Methylvalin (2-Methylaminoisovaleriansäure), N,N-Dimethylvalin, Prolin (Pyrrolidin-2-carbonsäure), N-Methylprolin, N-Methylserin, N,N-Dimethylserin, 2-(Methylamino)-isobuttersäure, Piperidin-2-carbonsäure, N-Methyl-piperidin-2-carbonsäure,
β-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie 3-Dimethylaminopropionsäure, N-Methyliminodipropionsäure, N-Methyl-piperidin-3-carbonsäure,
γ-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie 4-Dimethylaminobuttersäure,
oder Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, wie N-Methyl-piperidin-4-carbonsäure.

Unter den anorganischen Säuren sind Phosphorsäure und Schwefelsäure, insbesondere Phosphorsäure, bevorzugt.

Unter den Carbonsäuren sind Ameisensäure, Essigsäure, Benzoesäure, Bernsteinsäure und Adipinsäure bevorzugt.

Unter den Sulfonsäuren sind Methansulfonsäure, p-Toluolsulfonsäure und 2-(4-(2-Hydroxyethyl)-1-piperazinyl)-ethansulfonsäure (HEPES) bevorzugt.

Unter den Phosphonsäuren sind 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) (HDTMP) und Nitrilo-tris(methylenphosphonsäure) bevorzugt, wovon 1-Hydroxyethan-1,1-diphosphonsäure besonders bevorzugt ist.

Unter den Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, sind N,N-Dimethylglycin und N-Methylalanin bevorzugt.

Besonders bevorzugt ist die Säure eine anorganische Säure.

Das Absorptionsmittel kann auch Additive, wie Korrosionsinhibitoren, Enzyme etc. enthalten. Im Allgemeinen liegt die Menge an derartigen Additiven im Bereich von etwa 0,01 bis 3 Gew.-% des Absorptionsmittels.

Das erfindungsgemäße Verfahren betrifft die Behandlung von kohlenwasserstoffhaltigen Fluiden. Fluide sind einerseits Gase, wie Erdgas, Synthesegas, Koksofengas, Kohlevergasungsgas, Kreisgas und Deponiegase, und andererseits mit dem Absorptionsmittel im Wesentlichen nicht mischbare Flüssigkeiten, wie LPG (Liquefied Petroleum Gas) oder NGL (Natural Gas Liquids).Die erfindungsgemäß enthaltenen Kohlenwasserstoffe sind z. B. aliphatische Kohlenwasserstoffe, wie C₁-C₄-Kohlenwasserstoffe, wie Methan, ungesättigte Kohlenwasserstoffe, wie Ethylen oder Propylen, oder aromatische Kohlenwasserstoffe wie Benzol, Toluol oder Xylol.

Erfindungsgemäß ist der Fluidstrom ein Kohlenwasserstoffe enthaltender Fluidstrom; insbesondere ein Erdgasstrom. Besonders bevorzugt enthält der Fluidstrom mehr als 1,0 Vol.-% Kohlenwasserstoffe, ganz besonders bevorzugt mehr als 5,0 Vol.-% Kohlenwasserstoffe, am meisten bevorzugt mehr als 15 Vol.-% Kohlenwasserstoffe.

Der Schwefelwasserstoff-Partialdruck im Fluidstrom beträgt üblicherweise mindestens 2,5 mbar. In bevorzugten Ausführungsformen liegt im Fluidstrom ein Schwefelwasserstoff-Partialdruck von mindestens 0,1 bar, insbesondere mindestens 1 bar, und ein Kohlendioxid-Partialdruck von mindestens 0,2 bar, insbesondere mindestens 1 bar, vor. Die angegebenen Partialdrücke beziehen sich auf den Fluidstrom beim erstmaligen Kontakt mit dem Absorptionsmittel im Absorptionsschritt.

Im erfindungsgemäßen Verfahren wird der zu behandelnde Fluidstrom in einem ersten Absorber in Kontakt mit dem H₂S-selektiven Absorptionsmittel gebracht, wodurch H₂S absorbiert und CO₂ co-absorbiert wird. Man erhält einen behandelten Fluidstrom und ein H₂S-beladenes Absorptionsmittel. Der Druck im ersten Absorber beträgt 10 bis 150 bar, vorzugsweise 30 bis 120 bar, meist 50 bis 90 bar. Der Gesamtdruck des Fluidstroms entspricht im Wesentlichen dem Druck im ersten Absorber.

Bei der Behandlung des H₂S und CO₂ enthaltenden Fluidstroms im ersten Absorber handelt es sich üblicherweise nicht um eine Totalabsorption, d. h. der behandelte Fluidstrom enthält eine gegenüber der Konzentration im zu behandelnden Fluidstrom verringerte Konzentration an CO₂. Der behandelte Fluidstrom enthält üblicherweise mindestens noch 1,0 Vol.-% CO₂, bevorzugt mindestens 1,5 Vol.-% CO₂, besonders bevorzugt mindestens 2,0 Vol.-% CO₂.

Als erster Absorber fungiert eine in üblichen Gaswäscheverfahren eingesetzte Waschvorrichtung. Geeignete Waschvorrichtungen sind beispielsweise Füllkörper, Packungs- und Bodenkolonnen, Membrankontaktoren, Radialstromwäscher, Strahlwäscher, Venturi-Wäscher und Rotations-Sprühwäscher, bevorzugt Packungs-, Füllkörper- und Bodenkolonnen, besonders bevorzugt Boden- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist. In Bodenkolonnen sind Sieb-, Glocken- oder Ventilböden eingebaut, über welche die Flüssigkeit strömt. Füllkörperkolonnen können mit unterschiedlichen Formkörpern gefüllt werden. Wärme- und Stoffaustausch werden durch die Vergrößerung der Oberfläche aufgrund der meist etwa 25 bis 80 mm großen Formkörper verbessert. Bekannte Beispiele sind der Raschig-Ring (ein Hohlzylinder), Pall-Ring, Hiflow-Ring, Intalox-Sattel und dergleichen. Die Füllkörper können geordnet, aber auch regellos (als Schüttung) in die Kolonne eingebracht werden. Als Materialien kommen in Frage Glas, Keramik, Metall und Kunststoffe. Strukturierte Packungen sind eine Weiterentwicklung der geordneten Füllkörper. Sie weisen eine regelmäßig geformte Struktur auf. Dadurch ist es bei Packungen möglich, Druckverluste bei der Gasströmung zu reduzieren. Es gibt verschiedene Ausführungen von Packungen z. B. Gewebe- oder Blechpackungen. Als Material können Metall, Kunststoff, Glas und Keramik eingesetzt werden.

Die Temperatur des Absorptionsmittels in den Absorbern beträgt im Allgemeinen etwa 30 bis 100 °C, bei Verwendung einer Kolonne beispielsweise 30 bis 70 °C am Kopf der Kolonne und 50 bis 100 °C am Boden der Kolonne.

Das H₂S-beladene Absorptionsmittel wird durch indirekten Wärmetausch mittels des ersten Wärmetauschers mit regeneriertem H₂S-selektiven Absorptionsmittel aus der Desorptionskolonne erwärmt, um das Abflashen von CO₂ zu begünstigen und den Energiebedarf in der Desorptionskolonne zu minimieren. Das erwärmte H₂S-beladene Absorptionsmittel wird in einem Niederdruck-Entspannungsbehälter auf einen Druck von 1,2 bis 10 bar entspannt; wobei man ein erstes CO₂-reiches Abgas und ein teilregeneriertes Absorptionsmittel erhält.

In der Regel wird das vom ersten Wärmetauscher kommende regenerierte H₂S-selektive Absorptionsmittel mittels eines Kühlers auf eine geeignete Absorptionstemperatur gebracht. Beispielsweise wird das regenerierte H₂S-selektive Absorptionsmittel auf eine Temperatur von 30 bis 60 °C gekühlt.

Im Niederdruck-Entspannungsbehälter erfolgt eine Druckentspannung des beladenen Absorptionsmittels von einem höheren Druck, wie er beispielsweise im ersten Absorber bzw. einem zwischen Absorber und Niederdruck-Entspannungsbehälter vorgesehenen Hochdruck-Entspannungsbehälter herrscht, auf einen niedrigeren Druck von 1,2 bis 10 bar, beispielsweise 1,2 bis 3 bar. Unter diesen Bedingungen werden wesentliche Teile des im beladenen Absorptionsmittel enthaltenen Kohlendioxids als Gas freigesetzt und können abgezogen werden. Die Druckentspannung kann beispielsweise mittels eines Drosselventils und/oder einer Entspannungsturbine geschehen.

Vorzugsweise ist der Druck im Niederdruck-Entspannungsbehälter höher als der Druck, bei dem der zweite Absorber betrieben wird, z. B. um 0,1 bis 0,5 bar höher. Auf diese Weise ist kein Kompressor oder Verdichter erforderlich, um das erste CO₂-reiche Abgas in den zweiten Absorber zu leiten.

Der Niederdruck-Entspannungsbehälter kann als liegender oder stehender Behälter verwendet werden. Als Einbauten können für das Entspannungsverfahren geeignete Flüssigkeitseinlaufsysteme verwendet werden. Zu diesen gehören beispielsweise Flash-Box-, Flashing-Feed-Gallery- (im Falle von stehenden Behältern) oder Schoepentoeter-Einlaufsysteme. Zur Verbesserung der Trennung von Gas und Flüssigkeit im Behälter können zusätzliche Einbauten, wie Füllkörper, strukturierte Packung, Gestricke, oder Lochbleche eingesetzt werden.

In einer bevorzugten Ausführungsform wird das H₂S-beladene Absorptionsmittel nach Verlassen des ersten Absorbers und vor der Entspannung im Niederdruck-Entspannungsbehälter in einem Hochdruck-Entspannungsbehälter auf einen Druck von 5 bis 20 bar, vorzugsweise 5 bis 15 bar, entspannt. Die im Hochdruck-Entspannungsbehälter herrschende Temperatur ist bevorzugt im Wesentlichen gleich der Temperatur des beladenen Absorptionsmittels. Unter diesen Bedingungen werden im Wesentlichen alle im beladenen Absorptionsmittel enthaltenen co-absorbierten Kohlenwasserstoffe und andere Gase wie Stickoxide als Gas freigesetzt und können aus dem Verfahren ausgeführt oder zurück in den ersten Absorber zurückgeführt werden.

Der Hochdruck-Entspannungsbehälter kann als liegender oder stehender Behälter verwendet werden. Als Einbauten können für das Entspannungsverfahren geeignete Flüssigkeitseinlaufsysteme verwendet werden. Zu diesen gehören beispielsweise Flash-Box-, Flashing-Feed-Gallery- (im Falle von stehenden Behältern) oder Schoepentoeter-Einlaufsysteme. Zur Verbesserung der Trennung von Gas und Flüssigkeit im Behälter können zusätzliche Einbauten, wie Füllkörper, strukturierte Packung, Gestricke, oder Lochbleche eingesetzt werden.

In einer bevorzugten Ausführungsform erwärmt man das aus dem Niederdruck-Entspannungsbehälter abgezogene teilregenerierte Absorptionsmittel vor dessen Regeneration in der Desorptionskolonne durch indirekten Wärmetausch mittels eines zweiten Wärmetauschers mit regeneriertem H₂S-selektiven Absorptionsmittel. Man erhält ein teilweise abgekühltes regeneriertes Absorptionsmittel, dessen Temperaturniveau ausreichend ist, um das H₂S-beladene Absorptionsmittel durch indirekten Wärmetausch zu erwärmen. Durch Variation der im ersten Wärmetauscher und im zweiten Wärmetauscher übertragenen relativen Wärmemengen kann die Menge des im Niederdruck-Entspannungsbehälter abgeflashten CO₂ variiert werden, ohne den Energiebedarf in der Desorptionskolonne zu erhöhen.

Das teilregenerierte Absorptionsmittel wird in einer Desorptionskolonne regeneriert. Es werden aus dem teilregenerierten Absorptionsmittel H₂S, restliches CO₂ und gegebenenfalls weitere saure Gasbestandteile als ein H₂S-reiches Abgas freigesetzt, wobei ein regeneriertes Absorptionsmittel erhalten wird. In der Regel umfasst die Regeneration wenigstens eine der Maßnahmen Erwärmung, Entspannung und Strippen mit einem inerten Fluid.

Das teilregenerierte Absorptionsmittel wird vorzugsweise auf eine Schwefelwasserstoffbeladung regeneriert, die einer Gleichgewichtsbeladung für einen Schwefelwasserstoffgehalt von vorzugsweise weniger als 90%, besonders bevorzugt weniger als 50%, des Schwefelwasserstoffgehalts des behandelten Fluidstroms entspricht. Unter Gleichgewichtsbeladung wird der Gehalt an Schwefelwasserstoff im Absorptionsmittel verstanden, der unter den Druck- und Temperaturbedingungen am Kopf des Absorbers im Gleichgewicht mit dem angegebenen Gehalt an Schwefelwasserstoff im behandelten Gasstrom steht, der den Absorber verlässt.

Vorzugsweise beträgt die kumulierte CO₂- und H₂S-Beladung des regenerierten Absorptionsmittels weniger als 0,10 mol/mol, insbesondere weniger als 0,05 mol/mol. Die Beladung wird ausgedrückt als Stoffmenge des im Absorptionsmittel gelösten CO₂ + H₂S pro Stoffmenge der Komponenten des Absorptionsmittels, welche mit CO₂ und H₂S reagieren (beispielsweise aminische Komponenten).

Die Regeneration des teilregenerierten Absorptionsmittels umfasst bevorzugt eine Erwärmung des mit sauren Gasbestandteilen beladenen teilregenerierten Absorptionsmittels. Die absorbierten Sauergase werden dabei mittels des durch Erhitzen des Absorptionsmittels gewonnen Dampfes abgestrippt. Wird als Absorptionsmittel eine wässrige Lösung eines Amins verwendet, ist das Strippgas meist Wasserdampf, der durch partielles Verdampfen der Lösung im Sumpf der Desorptionskolonne oder einem mit der Desorptionskolonne verbundenen Verdampfer erzeugt wird. Der Dampf kann teilweise oder vollständig durch ein inertes Fluid wie Stickstoff ersetzt werden. Der absolute Druck in der Desorptionskolonne liegt normalerweise bei 0,1 bis 3,5 bar, bevorzugt 1,0 bis 2,5 bar. Die Temperatur liegt normalerweise bei 50 °C bis 170 °C, bevorzugt bei 80 °C bis 130 °C, wobei die Temperatur natürlich vom Druck abhängig ist.

Bei der Desorptionskolonne kann es sich um eine Füllkörper-, Packungs- oder Bodenkolonne handeln. Die Desorptionskolonne weist am Sumpf einen Aufheizer auf, z. B. einen Aufkocher, Naturumlaufverdampfer, Zwangsumlaufverdampfer, oder Zwangsumlaufentspannungsverdampfer. Am Kopf weist die Desorptionskolonne einen Auslass für die freigesetzten Sauergase auf. Mitgeführte Absorptionsmitteldämpfe können optional in einem Kondensator kondensiert und in die Kolonne zurückgeführt.

Das bei der Regeneration anfallende H₂S-reiche Abgas wird einer Claus-Einheit zugeführt. In der Claus-Einheit kann der im Gasstrom enthaltene Schwefelwasserstoff unter Zufuhr von Luft in elementaren Schwefel umgewandelt und der Umwelt dauerhaft entzogen werden. Ein Teil des Schwefelwasserstoffs wird im Claus-Ofen mit Luft zu Schwefeldioxid verbrannt. Ein weiterer Teil des Schwefelwasserstoffs reagiert mit dem SO₂ unter Komproportionierung zu elementarem Schwefel. Der restliche Schwefelwasserstoff wird mit dem verbliebenen SO₂ bei tieferer Temperatur katalytisch zu weiterem elementaren Schwefel umgesetzt. Im Claus-Endgas (Tailgas) hinter der letzten katalytischen Stufe befinden sich neben N₂, Wasserdampf und CO₂ immer noch Spuren von Schwefelverbindungen wie SO₂, COS, CS₂ sowie H₂S, die entfernt werden müssen, um Geruchsbelästigungen und Umweltschäden zu minimieren. Mittels einer nachgeschalteten Hydriereinheit werden der im Claus-Tailgas enthaltene Schwefel bzw. die sauerstoffhaltigen Schwefelverbindungen und/oder der Schwefelkohlenstoff zu Schwefelwasserstoff hydriert. Es wird ein hydriertes Claus-Endgas erhalten.

Das hydrierte Claus-Endgas weist bevorzugt einen H₂S-Gehalt im Bereich von 0,5 bis 5 Vol.-%, besonders bevorzugt 0,8 bis 4,8 Vol.-% auf. Höhere H₂S-Gehalte des hydrierten Claus-Endgases bedingen eine wirtschaftlich nachteilige höhere Umlaufrate des Absorptionsmittels. Das hydrierte Claus-Endgas wird geeignet abgekühlt, bevor es in den zweiten Absorber geleitet wird. Hierfür wird üblicherweise ein Kühler bzw. Kondensator verwendet. Üblicherweise wird das hydrierte Claus-Endgas einem Wasserquench unterzogen. Dabei wird es auf etwa 30 bis 60 °C abgekühlt. Die Kühlung des Prozessgases im Wasserquench erfolgt in der Regel mittels Kreislaufwasser in einem geschlossenen Kühlkreislauf. Das dabei anfallende Überschusswasser wird über eine Niveauregelung aus dem Kühlkreislauf ausgeschleust.

Auch das erste CO₂-reiche Abgas wird vorzugsweise auf eine Temperatur von 30 bis 60 °C abgekühlt, bevor es in den zweiten Absorber geführt wird. Hierfür wird üblicherweise ein Kühler bzw. Kondensator verwendet. Zweckmäßigerweise wird das erste CO₂-reiche Abgas, wie auch das hydrierte Claus-Endgas, einem Wasserquench unterzogen. Bevorzugt wird für den Wasserquench des hydrierten Claus-Endgases und des ersten CO₂-reichen Abgases dieselbe Apparatur verwendet.

Die abgekühlten, vereinigten Abgase werden im zweiten Absorber bei einem Druck von 1 bis 4 bar mit einem zweiten Teilstrom des regenerierten H₂S-selektiven Absorptionsmittels behandelt, wobei man ein zweites CO₂-reiches Abgas und ein zweites H₂S-beladenes Absorptionsmittel erhält. Als zweiter Absorber fungiert eine in üblichen Gaswäscheverfahren eingesetzte Waschvorrichtung mit den bezüglich des ersten Absorbers genannten Bevorzugungen hinsichtlich ihrer Ausführungsformen, wobei der zweite Absorber üblicherweise kleiner ausgelegt ist als der erste Absorber.

Das zweite CO₂-reiche Abgas kann aus dem Verfahren ausgeleitet und beispielsweise einer Abgasnachbehandlung, wie einer Verbrennung, zugeführt werden. Da das zweite H₂S-beladene Absorptionsmittel in der Regel nicht vollständig beladen ist und daher noch CO₂ und/oder H₂S aufnehmen kann, wird das zweite H₂S-beladene Absorptionsmittel zur Nutzung der Restkapazität in den ersten Absorbers geleitet.

Die Zufuhrstelle für das zweite H₂S-beladene Absorptionsmittel in den ersten Absorber liegt vorzugsweise unterhalb der Dosierstelle des ersten Teilstroms des regenerierten H₂S-selektiven Absorptionsmittels. So bilden sich zwei Absorptionszonen im Absorber aus, wobei unterhalb der Zufuhrstelle für das zweite H₂S-beladene Absorptionsmittel eine Hauptmenge von CO₂ und/oder H₂S aus dem Fluidstrom entfernt werden und oberhalb der Zufuhrstelle eine Nachbehandlung des Fluidstroms mittels des Teilstroms des regenerierten H₂S-selektiven Absorptionsmittels erfolgt. So werden die Beladungskapazitäten des regenerierten H₂S-beladenen Absorptionsmittels und des zweiten H₂S-beladenen Absorptionsmittels optimal genutzt und das sich im Absorber einstellende Temperaturprofil optimiert.

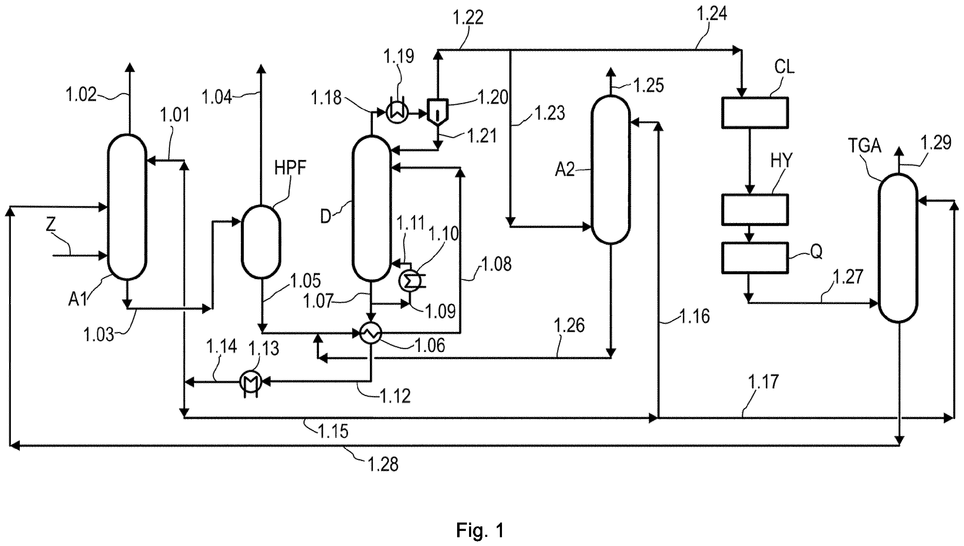

Die Erfindung wird anhand der beigefügten Zeichnungen und der nachfolgenden Beispiele näher veranschaulicht. In den Fig. 1 bis 4 wurden für Elemente gleicher Funktion gleiche Bezugszeichen verwendet. In den Figuren sind zum Verständnis nicht notwendige Anlagenteile, wie Pumpen, der Übersichtlichkeit halber nicht abgebildet. In der Regel würde der Fachmann Pumpeneinbauten in den Leitungen 3.01, 3.02 und 3.15 bzw. 4.01, 4.02 und 4.18 vorsehen.
Fig. 1 ist eine schematische Darstellung einer zur Behandlung eines H₂S und CO₂ enthaltenden Fluidstroms geeigneten Vergleichsanlage.
Fig. 2 ist eine schematische Darstellung einer weiteren zur Behandlung eines H₂S und CO₂ enthaltenden Fluidstroms geeigneten Vergleichsanlage.
Fig. 3 ist eine schematische Darstellung einer zur Durchführung des erfindungsgemäßen Verfahrens geeigneten Anlage.
Fig. 4 ist eine schematische Darstellung einer weiteren zur Durchführung des erfindungsgemäßen Verfahrens geeigneten Anlage.

Gemäß Fig. 1 wird über die Zuleitung Z ein geeignet vorbehandeltes, Schwefelwasserstoff und Kohlendioxid enthaltendes Gas in einem Absorber A1 mit im oberen Bereich über die Absorptionsmittelleitung 1.01 zugeführtem regenerierten Absorptionsmittel und dem im mittleren Bereich über die Absorptionsmittelleitung 1.28 zugeführten teilbeladenen Absorptionsmittel im Gegenstrom in Kontakt gebracht. Das Absorptionsmittel entfernt Schwefelwasserstoff und Kohlendioxid durch Absorption aus dem Gas; dabei wird über die Abgasleitung 1.02 ein an Schwefelwasserstoff und Kohlendioxid abgereicherter, behandelter Fluidstrom gewonnen.

Über eine Absorptionsmittelleitung 1.03 wird das CO₂- und H₂S-beladene Absorptionsmittel in einen Hochdruck-Entspannungsbehälter HPF geleitet und entspannt (z. B. von etwa 70 bar auf 5 bis 20 bar), wobei die Temperatur im Wesentlichen gleich der Temperatur des beladenen Absorptionsmittels ist. Typischerweise ist die Temperaturdifferenz kleiner als 10 °C, bevorzugt kleiner als 5 °C. Unter diesen Bedingungen werden im Wesentlichen die im beladenen Absorptionsmittel enthaltenen Kohlenwasserstoffe als Gas freigesetzt und können über die Leitung 1.04 ausgeführt werden.

Über eine Absorptionsmittelleitung 1.05, einen Wärmetauscher 1.06, in dem das CO₂- und H₂S-beladene Absorptionsmittel mit der Wärme des über die Absorptionsmittelleitung 1.07 geführten, regenerierten Absorptionsmittels aufgeheizt wird, und die Absorptionsmittelleitung 1.08 wird das mit CO₂- und H₂S-beladene Absorptionsmittel einer Desorptionskolonne D zugeleitet und regeneriert.

Aus dem unteren Teil der Desorptionskolonne D wird ein Teilstrom des über die Absorptionsmittelleitung 1.07 geführten, regenerierten Absorptionsmittels über die Absorptionsmittelleitung 1.09 in den Aufkocher 1.10 geführt, wo es erhitzt und zumindest teilweise als Dampf vorliegend über die Absorptionsmittelleitung 1.11 in die Desorptionskolonne D zurückgeführt wird.

Ein weiterer Teilstrom des über die Absorptionsmittelleitung 1.07 geführten, regenerierten Absorptionsmittels wird über den Wärmetauscher 1.06, in dem das regenerierte Absorptionsmittel das CO₂- und H₂S-beladene Absorptionsmittel aufheizt und selbst dabei abkühlt, die Absorptionsmittelleitung 1.12, den Kühler 1.13 und die Absorptionsmittelleitung 1.14 weitergeführt und in die Teilströme 1.01 und 1.15 geteilt.

Der Teilstrom 1.01 wird dem Absorber A1 zugeführt. Der Teilstrom 1.15 wird wiederum in die Teilströme 1.16 und 1.17 geteilt.

Das in der Desorptionskolonne D freigesetzte CO₂- und H₂S-haltige Gas verlässt die Desorptionskolonne D über die Abgasleitung 1.18. Es wird über einen Kühler 1.19 in einen Kondensator mit integrierter Phasentrennung 1.20 geführt, wo es von mitgeführtem Absorptionsmitteldampf getrennt wird. Anschließend wird eine hauptsächlich aus Wasser bestehende Flüssigkeit über die Absorptionsmittelleitung 1.21 in den oberen Bereich der Desorptionskolonne D geführt, und ein CO₂- und H₂S-haltiges Gas über die Gasleitung 1.22 weitergeführt. Der Gasstrom 1.22 wird in die Teilströme 1.23 und 1.24 geteilt.

Der Teilstrom 1.23 wird in einen Absorber A2 geführt und dort mit regeneriertem Absorptionsmittel, das über die Absorptionsmittelleitung 1.16 zugeführt wird, im Gegenstrom in Kontakt gebracht. Das Absorptionsmittel entfernt Schwefelwasserstoff durch Absorption aus dem Gas; dabei wird über die Abgasleitung 1.25 im Wesentlichen reines Kohlendioxid gewonnen. Über die Absorptionsmittelleitung 1.26 wird ein H₂S-beladenes Absorptionsmittel in die Absorptionsmittelleitung 1.05 geleitet und über den Wärmetauscher 1.06 und die Absorptionsmittelleitung 1.08 der Desorptionskolonne D zugeleitet und regeneriert.

Der CO₂- und H₂S-haltige Gasstrom 1.24 wird einer Claus-Anlage CL zugeführt, deren Abgas hauptsächlich N₂, CO₂, SO₂, COS, CS₂, H₂S, H₂O und Schwefel enthält. Das Abgas wird in der Hydrierungsanlage HY hydriert. Das hydrierte Claus-Tailgas, welches im Wesentlichen H₂, N₂, CO₂, H₂O und H₂S umfasst, wird durch einen Quenchkühler Q geführt und abgekühlt. Die Quenchflüssigkeit im Quenchkühler Q ist im Wesentlichen Wasser.

Das abgekühlte, hydrierte Claus-Tailgas wird über die Gasleitung 1.27 in den Tailgasabsorber TGA eingespeist, wo es mit dem über die Absorptionsmittelleitung 1.17 zugeführten, regenerierten Absorptionsmittel im Gegenstrom in Kontakt gebracht wird. Über die Absorptionsmittelleitung 1.28 wird ein H₂S-teilbeladenes Absorptionsmittel aus dem Tailgasabsorber TGA in den mittleren Teil des Absorbers A1 eingespeist. Über eine Gasleitung 1.29 wird das H₂S-abgereicherte Gas aus dem Tailgasabsorber TGA abgeführt und aus dem Verfahren ausgeführt.

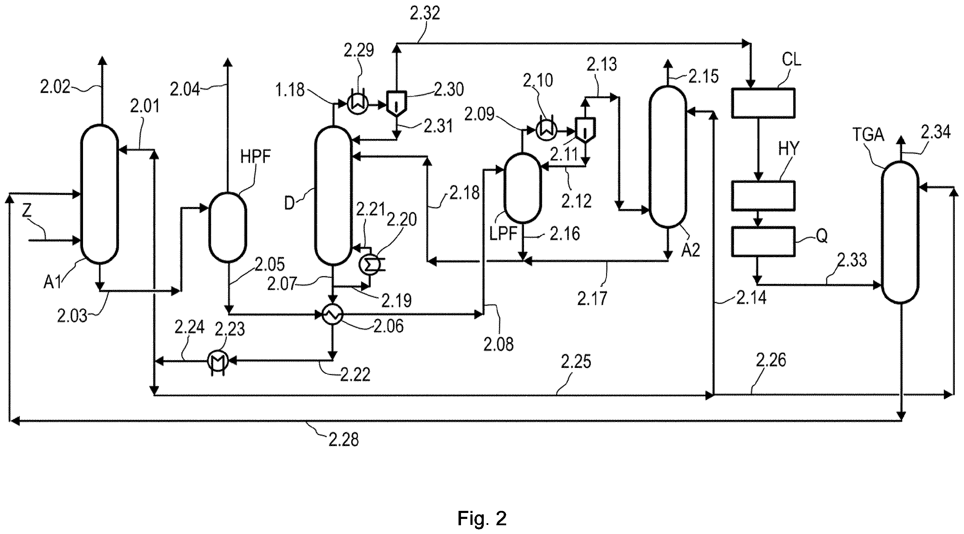

Gemäß Fig. 2 wird über die Zuleitung Z ein geeignet vorbehandeltes, Schwefelwasserstoff und Kohlendioxid enthaltendes Gas in einem Absorber A1 mit im oberen Bereich über die Absorptionsmittelleitung 2.01 zugeführtem regenerierten Absorptionsmittel und dem im mittleren Bereich über die Absorptionsmittelleitung 2.28 zugeführten teilbeladenen Absorptionsmittel im Gegenstrom in Kontakt gebracht. Das Absorptionsmittel entfernt Schwefelwasserstoff und Kohlendioxid durch Absorption aus dem Gas; dabei wird über die Abgasleitung 2.02 ein an Schwefelwasserstoff und Kohlendioxid abgereicherter, behandelter Fluidstrom gewonnen.

Über eine Absorptionsmittelleitung 2.03 wird das CO₂- und H₂S-beladene Absorptionsmittel in einen Hochdruck-Entspannungsbehälter HPF geleitet und entspannt (z. B. von etwa 70 bar auf 5 bis 20 bar), wobei die Temperatur im Wesentlichen gleich der Temperatur des beladenen Absorptionsmittels ist. Typischerweise ist die Temperaturdifferenz kleiner als 10 °C, beispielsweise kleiner als 5 °C. Unter diesen Bedingungen werden im Wesentlichen alle im beladenen Absorptionsmittel enthaltenen Kohlenwasserstoffe als Gas freigesetzt und können über die Leitung 2.04 ausgeführt werden.

Über eine Absorptionsmittelleitung 2.05, einen Wärmetauscher 2.06, in dem das CO₂-und H₂S-beladene Absorptionsmittel mit der Wärme des über die Absorptionsmittelleitung 2.07 geführten, regenerierten Absorptionsmittels aufgeheizt wird, und die Absorptionsmittelleitung 2.08 wird das mit CO₂- und H₂S-beladene Absorptionsmittel in einen Niederdruck-Entspannungsbehälter LPF geleitet und entspannt (z. B. auf einen Druck von 1,2 bis 10 bar, beispielsweise 1,2 bis 3 bar). Unter diesen Bedingungen werden wesentliche Teile des im beladenen Absorptionsmittel enthaltenen Kohlendioxids als Gas freigesetzt und können über die Gasleitung 2.09 weitergeführt werden, wobei ein teilregeneriertes Absorptionsmittel gewonnen wird.

Das CO₂-Gas wird über einen Kühler 2.10 in einen Kondensator mit integrierter Phasentrennung 2.11 geführt, wo es von mitgeführtem Absorptionsmitteldampf getrennt wird. Anschließend wird eine hauptsächlich aus Wasser bestehende Flüssigkeit über die Absorptionsmittelleitung 2.12 in den oberen Bereich des Niederdruck-Entspannungsbehälters LPF geführt. Das CO₂-Gas enthält erhebliche Mengen an H₂S, welches abgetrennt werden muss, bevor das CO₂ ausgeführt werden kann. Hierzu wird das Gas über die Gasleitung 2.13 in den Absorber A2 eingespeist, wo es mit dem über die Absorptionsmittelleitung 2.14 zugeführten, regenerierten Absorptionsmittel im Gegenstrom in Kontakt gebracht wird. Das Absorptionsmittel entfernt Schwefelwasserstoff durch Absorption aus dem Gas; dabei wird im Wesentlichen reines Kohlendioxid gewonnen, welches über eine Gasleitung 2.15 aus der Anlage geführt wird.

Das aus dem unteren Bereich des Niederdruck-Entspannungsbehälters LPF über die Absorptionsmittelleitung 2.16 ausgeführte, teilregenerierte Absorptionsmittel und das aus dem unteren Bereich des Absorbers A2 über die Absorptionsmittelleitung 2.17 ausgeführte, H₂S-beladene Absorptionsmittel werden über die Absorptionsmittelleitungen 2.18 in den oberen Bereich der Desorptionskolonne D eingespeist und regeneriert.

Aus dem unteren Teil der Desorptionskolonne D wird ein Teilstrom des über die Absorptionsmittelleitung 2.07 geführten, regenerierten Absorptionsmittels über die Absorptionsmittelleitung 2.19 in den Aufkocher 2.20 geführt, wo es erhitzt und zumindest teilweise als Dampf vorliegend über die Absorptionsmittelleitung 2.21 in die Desorptionskolonne D zurückgeführt wird.

Ein weiterer Teilstrom des über die Absorptionsmittelleitung 2.07 geführten, regenerierten Absorptionsmittels wird über den Wärmetauscher 2.06, in dem das regenerierte Absorptionsmittel das CO₂- und H₂S-beladene Absorptionsmittel aufheizt und selbst dabei abkühlt, die Absorptionsmittelleitung 2.22, den Kühler 2.23 und die Absorptionsmittelleitung 2.24 weitergeführt und in die Teilströme 2.01 und 2.25 geteilt. Der Teilstrom 2.01 wird dem Absorber A1 zugeführt. Der Teilstrom 2.25 wird wiederum in die Teilströme 2.14 und 2.26 geteilt.

Das in der Desorptionskolonne D freigesetzte CO₂- und H₂S-haltige Gas verlässt die Desorptionskolonne D über die Abgasleitung 2.27. Es wird über einen Kühler 2.29 in einen Kondensator mit integrierter Phasentrennung 2.30 geführt, wo es von mitgeführtem Absorptionsmitteldampf getrennt wird. Anschließend wird eine hauptsächlich aus Wasser bestehende Flüssigkeit über die Absorptionsmittelleitung 2.31 in den oberen Bereich der Desorptionskolonne D geführt, und ein CO₂- und H₂S-haltiges Gas über die Gasleitung 2.32 weitergeführt.

Der CO₂- und H₂S-haltige Gasstrom 2.32 wird einer Claus-Anlage CL zugeführt, deren Abgas hauptsächlich N₂, CO₂, SO₂, COS, CS₂, H₂S, H₂O und Schwefel enthält. Das Abgas wird in der Hydrierungsanlage HY hydriert. Das hydrierte Claus-Tailgas, welches im Wesentlichen H₂, N₂, CO₂, H₂O und H₂S umfasst, wird durch einen Quenchkühler Q geführt und abgekühlt. Die Quenchflüssigkeit im Quenchkühler Q ist im Wesentlichen Wasser.

Das abgekühlte, hydrierte Claus-Tailgas wird über die Gasleitung 2.33 in den Tailgasabsorber TGA eingespeist, wo es mit dem über die Absorptionsmittelleitung 2.26 zugeführten, regenerierten Absorptionsmittel im Gegenstrom in Kontakt gebracht wird. Über die Absorptionsmittelleitung 2.28 wird ein H₂S-teilbeladenes Absorptionsmittel aus dem Tailgasabsorber TGA in den mittleren Teil des Absorbers A1 eingespeist. Über eine Gasleitung 2.34 wird das H₂S-abgereicherte Gas aus dem Tailgasabsorber TGA abgeführt und aus dem Verfahren ausgeführt.

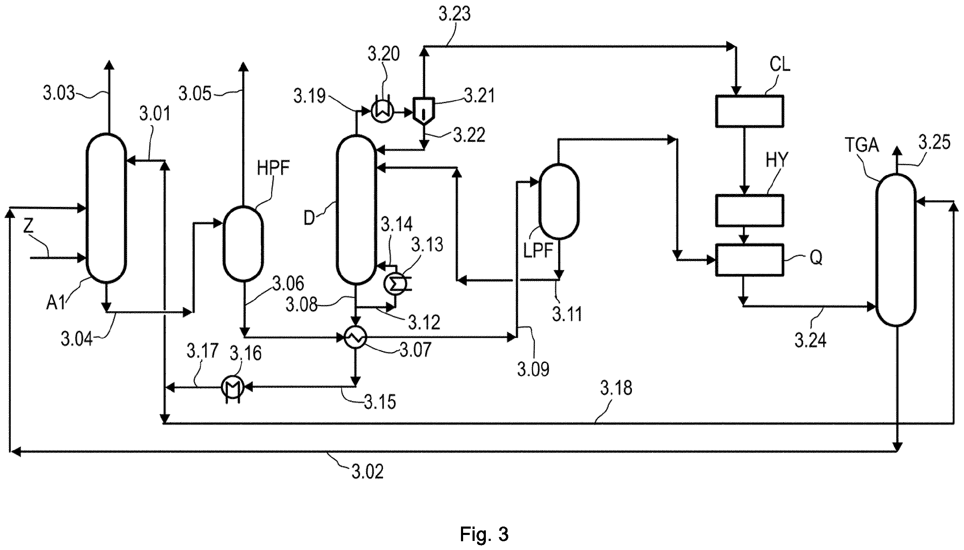

Gemäß Fig. 3 wird über die Zuleitung Z ein geeignet vorbehandeltes, Schwefelwasserstoff und Kohlendioxid enthaltendes Gas in einem Absorber A1 mit im oberen Bereich über die Absorptionsmittelleitung 3.01 zugeführtem regenerierten Absorptionsmittel und dem im mittleren Bereich über die Absorptionsmittelleitung 3.02 zugeführten teilbeladenen Absorptionsmittel im Gegenstrom in Kontakt gebracht. Das Absorptionsmittel entfernt Schwefelwasserstoff und Kohlendioxid durch Absorption aus dem Gas; dabei wird über die Abgasleitung 3.03 ein an Schwefelwasserstoff und Kohlendioxid abgereicherter, behandelter Fluidstrom gewonnen.

Über eine Absorptionsmittelleitung 3.04 wird das CO₂- und H₂S-beladene Absorptionsmittel in einen Hochdruck-Entspannungsbehälter HPF geleitet und entspannt (beispielsweise von etwa 70 bar auf 5 bis 20 bar), wobei die Temperatur im Wesentlichen gleich der Temperatur des beladenen Absorptionsmittels ist. Typischerweise ist die Temperaturdifferenz kleiner als 10 °C, bevorzugt kleiner als 5 °C. Unter diesen Bedingungen werden im Wesentlichen die im beladenen Absorptionsmittel enthaltenen Kohlenwasserstoffe als Gas freigesetzt und können über die Leitung 3.05 ausgeführt werden.

Über eine Absorptionsmittelleitung 3.06, einen Wärmetauscher 3.07, in dem das CO₂-und H₂S-beladene Absorptionsmittel mit der Wärme des über die Absorptionsmittelleitung 3.08 geführten, regenerierten Absorptionsmittels aufgeheizt wird, und die Absorptionsmittelleitung 3.09 wird das mit CO₂- und H₂S-beladene Absorptionsmittel in einen Niederdruck-Entspannungsbehälter LPF geleitet und auf einen Druck von 1,2 bis 10 bar, bevorzugt 1,2 bis 3 bar, entspannt. Unter diesen Bedingungen werden wesentliche Teile des im beladenen Absorptionsmittel enthaltenen Kohlendioxids als Gas freigesetzt und können als erstes CO₂-reiches Abgas über die Gasleitung 3.10 weitergeführt werden, wobei ein teilregeneriertes Absorptionsmittel gewonnen wird.

Das aus dem unteren Bereich des Niederdruck-Entspannungsbehälters LPF über die Absorptionsmittelleitung 3.11 ausgeführte, teilregenerierte Absorptionsmittel wird in den oberen Bereich einer Desorptionskolonne D eingespeist und regeneriert. Aus dem unteren Teil der Desorptionskolonne D wird ein Teilstrom des über die Absorptionsmittelleitung 3.08 geführten, regenerierten Absorptionsmittels über die Absorptionsmittelleitung 3.12 in den Aufkocher 3.13 geführt, wo es erhitzt und zumindest teilweise als Dampf vorliegend über die Absorptionsmittelleitung 3.14 in die Desorptionskolonne D zurückgeführt wird.

Anstelle des gezeigten Aufkochers können auch andere Wärmetauschertypen zur Erzeugung des Strippdampfes eingesetzt werden, wie ein Naturumlaufverdampfer, Zwangsumlaufverdampfer, oder Zwangsumlaufentspannungsverdampfer. Bei diesen Verdampfertypen wird ein gemischtphasiger Strom aus regeneriertem Absorptionsmittel und Strippdampf in den Sumpf der Desorptionskolonne zurückgefahren, wo die Phasentrennung zwischen dem Dampf und dem Absorptionsmittel stattfindet.

Ein weiterer Teilstrom des über die Absorptionsmittelleitung 3.08 geführten, regenerierten Absorptionsmittels wird über den Wärmetauscher 3.07, in dem das regenerierte Absorptionsmittel das CO₂- und H₂S-beladene Absorptionsmittel aufheizt und selbst dabei abkühlt, die Absorptionsmittelleitung 3.15, den Kühler 3.16 und die Absorptionsmittelleitung 3.17 weitergeführt und in die Teilströme 3.01 und 3.18 geteilt. Der Teilstrom 3.01 wird dem oberen Bereich des Absorbers A1 zugeführt. Der Teilstrom 3.18 wird in den oberen Bereich eines Tailgasabsorbers TGA eingespeist. Das in der Desorptionskolonne D freigesetzte H₂S-reiche Abgas verlässt die Desorptionskolonne D über die Abgasleitung 3.19. Es wird über einen Kühler 3.20 in einen Kondensator mit integrierter Phasentrennung 3.21 geführt, wo es von mitgeführtem Absorptionsmitteldampf getrennt wird. In dieser und allen andern zur Durchführung des erfindungsgemäßen Verfahrens geeigneten Anlagen können Kondensation und Phasentrennung auch getrennt voneinander vorliegen. Anschließend wird eine hauptsächlich aus Wasser bestehende Flüssigkeit über die Absorptionsmittelleitung 3.22 in den oberen Bereich der Desorptionskolonne D geführt, und das H₂S-reiche Abgas über die Gasleitung 3.23 weitergeführt.

Das H₂S-reiche Abgas wird über die Gasleitung 3.23 einer Claus-Anlage CL zugeführt, deren Abgas hauptsächlich N₂, CO₂, SO₂, COS, CS₂, H₂S, H₂O und Schwefel enthält. Das Abgas wird in der Hydrierungsanlage HY hydriert, wobei man hydriertes Claus-Endgas erhält. Das hydrierte Claus-Tailgas, welches im Wesentlichen H₂, N₂, CO₂, H₂O und H₂S umfasst, wird, ebenso wie das erste CO₂-reiche Abgas der Gasleitung 3.10 durch einen Quenchkühler Q geführt und abgekühlt. Die Quenchflüssigkeit im Quenchkühler Q ist im Wesentlichen Wasser.

Das hydrierte Claus-Endgas und das erste CO₂-reiche Abgas werden vereinigt und über die Gasleitung 3.24 in den Tailgasabsorber TGA eingespeist, wo das Gas mit dem über die Absorptionsmittelleitung 3.18 zugeführten, regenerierten Absorptionsmittel im Gegenstrom in Kontakt gebracht wird. Über die Absorptionsmittelleitung 3.02 wird ein zweites H₂S-beladenes Absorptionsmittel aus dem Tailgasabsorber TGA in den mittleren Teil des Absorbers A1 eingespeist. Die verbleibende Absorptionskapazität des zweiten H₂S-beladenen Absorptionsmittels aus dem Tailgasabsorber TGA kann so genutzt werden. Über eine Gasleitung 3.25 wird ein zweites CO₂-reiches Abgas aus dem Tailgasabsorber TGA abgeführt und aus dem Verfahren ausgeführt.

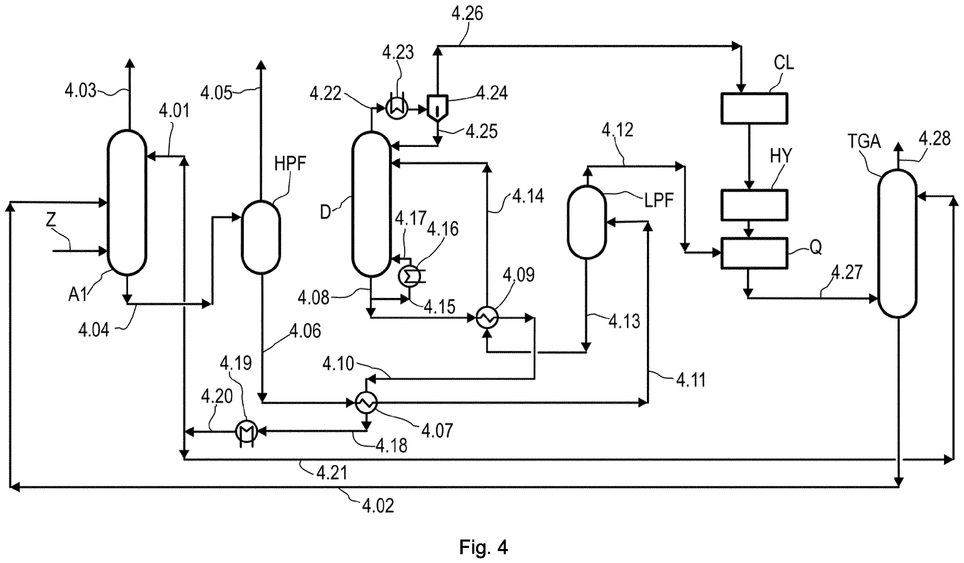

Gemäß Fig. 4 wird über die Zuleitung Z ein geeignet vorbehandeltes, Schwefelwasserstoff und Kohlendioxid enthaltendes Gas in einem Absorber A1 mit im oberen Bereich über die Absorptionsmittelleitung 4.01 zugeführtem regenerierten Absorptionsmittel und dem im mittleren Bereich über die Absorptionsmittelleitung 4.02 zugeführten teilbeladenen Absorptionsmittel im Gegenstrom in Kontakt gebracht. Das Absorptionsmittel entfernt Schwefelwasserstoff und Kohlendioxid durch Absorption aus dem Gas; dabei wird über die Abgasleitung 4.03 ein an Schwefelwasserstoff und Kohlendioxid abgereicherter, behandelter Fluidstrom gewonnen.

Über eine Absorptionsmittelleitung 4.04 wird das CO₂- und H₂S-beladene Absorptionsmittel in einen Hochdruck-Entspannungsbehälter HPF geleitet und entspannt (beispielsweise von etwa 70 bar auf 5 bis 20 bar), wobei die Temperatur im Wesentlichen gleich der Temperatur des beladenen Absorptionsmittels ist. Typischerweise ist die Temperaturdifferenz kleiner als 10 °C, bevorzugt kleiner als 5 °C. Unter diesen Bedingungen werden im Wesentlichen alle im beladenen Absorptionsmittel enthaltenen Kohlenwasserstoffe als Gas freigesetzt und können über die Leitung 4.05 ausgeführt werden.

Über eine Absorptionsmittelleitung 4.06, einen Wärmetauscher 4.07, in dem das CO₂- und H₂S-beladene Absorptionsmittel mit der Wärme des über die Absorptionsmittelleitung 4.08, den Wärmetauscher 4.09 und die Absorptionsmittelleitung 4.10 geführten, regenerierten Absorptionsmittels aufgeheizt wird, und die Absorptionsmittelleitung 4.11 wird das mit CO₂- und H₂S-beladene Absorptionsmittel in einen Niederdruck-Entspannungsbehälter LPF geleitet und auf einen Druck von 1,2 bis 10 bar, bevorzugt 1,2 bis 3 bar, entspannt. Unter diesen Bedingungen werden wesentliche Teile des im beladenen Absorptionsmittel enthaltenen Kohlendioxids als Gas freigesetzt und können als erstes CO₂-reiches Abgas über die Gasleitung 4.12 weitergeführt werden, wobei ein teilregeneriertes Absorptionsmittel gewonnen wird.

Das aus dem unteren Bereich des Niederdruck-Entspannungsbehälters LPF über die Absorptionsmittelleitung 4.13 ausgeführte, teilregenerierte Absorptionsmittel wird über den Wärmetauscher 4.09, in dem das teilregenerierte Absorptionsmittel mit der Wärme des über die Absorptionsmittelleitung 4.08 geführten, regenerierten Absorptionsmittels aufgeheizt wird, und die Absorptionsmittelleitung 4.14 in den oberen Bereich einer Desorptionskolonne D eingespeist und regeneriert. Aus dem unteren Teil der Desorptionskolonne D wird ein Teilstrom des über die Absorptionsmittelleitung 4.08 geführten, regenerierten Absorptionsmittels über die Absorptionsmittelleitung 4.15 in den Aufkocher 4.16 geführt, wo es erhitzt und zumindest teilweise als Dampf vorliegend über die Absorptionsmittelleitung 4.17 in die Desorptionskolonne D zurückgeführt wird.

Anstelle des gezeigten Aufkochers können auch andere Wärmetauschertypen zur Erzeugung des Strippdampfes eingesetzt werden, wie ein Naturumlaufverdampfer, Zwangsumlaufverdampfer, oder Zwangsumlaufentspannungsverdampfer. Bei diesen Verdampfertypen wird ein gemischtphasiger Strom aus regeneriertem Absorptionsmittel und Strippdampf in den Sumpf der Desorptionskolonne zurückgefahren, wo die Phasentrennung zwischen dem Dampf und dem Absorptionsmittel stattfindet.

Ein weiterer Teilstrom des über die Absorptionsmittelleitung 4.08 geführten, regenerierten Absorptionsmittels wird über den Wärmetauscher 4.09, in dem das regenerierte Absorptionsmittel das teilregenerierte Absorptionsmittel aufheizt und selbst dabei abkühlt, die Absorptionsmittelleitung 4.10, in dem das regenerierte Absorptionsmittel das CO₂- und H₂S-beladene Absorptionsmittel aufheizt und selbst dabei weiter abkühlt, die Absorptionsmittelleitung 4.18, den Kühler 4.19 und die Absorptionsmittelleitung 4.20 weitergeführt und in die Teilströme 4.01 und 4.21 geteilt. Der Teilstrom 4.01 wird dem oberen Bereich des Absorbers A1 zugeführt. Der Teilstrom 4.21 wird in den oberen Bereich eines Tailgasabsorbers TGA eingespeist.

Das in der Desorptionskolonne D freigesetzte H₂S-reiche Abgas verlässt die Desorptionskolonne D über die Abgasleitung 4.22. Es wird über einen Kühler 4.23 in einen Kondensator mit integrierter Phasentrennung 4.24 geführt, wo es von mitgeführtem Absorptionsmitteldampf getrennt wird. In dieser und allen andern zur Durchführung des erfindungsgemäßen Verfahrens geeigneten Anlagen können Kondensation und Phasentrennung auch getrennt voneinander vorliegen. Anschließend wird eine hauptsächlich aus Wasser bestehende Flüssigkeit über die Absorptionsmittelleitung 4.25 in den oberen Bereich der Desorptionskolonne D geführt, und das H₂S-reiche Abgas über die Gasleitung 4.26 weitergeführt.

Das H₂S-reiche Abgas wird über die Gasleitung 4.26 einer Claus-Anlage CL zugeführt, deren Abgas hauptsächlich N₂, CO₂, SO₂, COS, CS₂, H₂S, H₂O und Schwefel enthält. Das Abgas wird in der Hydrierungsanlage HY hydriert, wobei man hydriertes Claus-Endgas erhält. Das hydrierte Claus-Tailgas, welches im Wesentlichen H₂, N₂, CO₂, H₂O und H₂S umfasst, wird, ebenso wie das erste CO₂-reiche Abgas der Gasleitung 4.12 durch einen Quenchkühler Q geführt und abgekühlt. Die Quenchflüssigkeit im Quenchkühler Q ist im Wesentlichen Wasser.

Das hydrierte Claus-Endgas und das erste CO₂-reiche Abgas werden vereinigt und über die Gasleitung 4.27 in den Tailgasabsorber TGA eingespeist, wo das Gas mit dem über die Absorptionsmittelleitung 4.21 zugeführten, regenerierten Absorptionsmittel im Gegenstrom in Kontakt gebracht wird. Über die Absorptionsmittelleitung 4.02 wird ein zweites H₂S-beladenes Absorptionsmittel aus dem Tailgasabsorber TGA in den mittleren Teil des Absorbers A1 eingespeist. Die verbleibende Absorptionskapazität des zweiten H₂S-beladenen Absorptionsmittels aus dem Tailgasabsorber TGA kann so genutzt werden. Über eine Gasleitung 4.28 wird ein zweites CO₂-reiches Abgas aus dem Tailgasabsorber TGA abgeführt und aus dem Verfahren ausgeführt.

### Beispiele

Für die Durchführung der Beispiele wurde ein Simulationsmodell verwendet. Zur Beschreibung der Phasengleichgewichte wurde ein Modell von Pitzer (K. S. Pitzer, Activity Coefficients in Electrolyte Solutions 2nd ed., CRC Press, 1991, Chapter 3, Ion Interaction Approach: Theory) verwendet. Die Modellparameter wurden an Gaslöslichkeitsmessungen von Kohlendioxid, Schwefelwasserstoff und Kohlenwasserstoffen in wässrigen MDEA-Lösungen angepasst. Die Reaktionskinetik von CO₂ mit MDEA wurde durch Versuche in einer Doppelrührzelle bestimmt und in das Simulationsmodell übernommen.

Für alle Beispiele wurde ein wässriges Absorptionsmittel, umfassend 45 Gew.-% MDEA und 0,5 Gew.-% Phosphorsäure, angenommen. Die Zusammensetzung des zu behandelnden Fluidstroms wurde als 10,06 Vol.-% CO₂, 2,01 Vol.-% H₂S, 82,90 Vol.-% Methan und 5,03 Vol.-% Ethan (323.786 Nm³/h, 40,0 °C, 61,0 bar) festgelegt. Diese Zusammensetzung bezieht sich auf den Fluidstrom ohne Einbezug des Wassergehalts (1.876 Nm³/h), also den "trockenen Fluidstrom". Die Trennaufgabe bestand darin, den H₂S-Gehalt auf weniger als 5 Vol.-ppm und den CO₂-Gehalt auf weniger als 2,3 Vol.-% zu senken. Außerdem sollte der H₂S-Gehalt der behandelten Gase, die aus den dem ersten Absorber nachgeschalteten Absorbern ausgeführt werden, jeweils weniger als 100 Vol.-ppm betragen.

Im Absorber A1 wurden als Einbauten Füllkörper (IMTP40) verwendet. Die Packungshöhe im Absorber A1 betrug 16m, der Auslegung des Kolonnendurchmessers wurde 80% der Flutgrenze zu Grunde gelegt.

Im Absorber A2 wurden als Einbauten Füllkörper (IMTP40) verwendet. Die Packungshöhe im Absorber A2 betrug 6 m, der Auslegung des Kolonnendurchmessers wurde 80% der Flutgrenze zu Grunde gelegt.

Im Absorber TGA wurden als Einbauten Füllkörper (IMTP40) verwendet. Die Packungshöhe im Absorber TGA betrug 6 m, der Auslegung des Kolonnendurchmessers wurde 80% der Flutgrenze zu Grunde gelegt.

In der Desorptionskolonne D wurden als Einbauten Pall-Ringe (Größe: 50 mm) verwendet. Die Packungshöhe der Desorptionskolonne betrug 10m, der Auslegung des Kolonnendurchmessers wurde 65% der Flutgrenze zu Grunde gelegt.

### Beispiel 1 (Vergleichsbeispiel)

Mittels des Simulationsmodells wurde ein Verfahren zur Behandlung eines H₂S und CO₂ enthaltenden Fluidstroms unter Verwendung des oben beschriebenen Absorptionsmittels untersucht. Die Pilotanlage entsprach der Fig. 1. In folgender Tabelle sind die Zusammensetzungen verschiedener trockener Fluidströme angegeben:

| # | V | T | p | CO₂ | H₂S | CH₄ | C₂H₆ | N₂ | H₂ |
|---|---|---|---|---|---|---|---|---|---|
| | [Nm³/h] | [°C] | [bar] | [Vol.-%] | [Vol.-%] | [Vol.-%] | [Vol.-%] | [Vol.-%] | [Vol.-%] |
| Z | 323.786 | 40,0 | 61,0 | 10,06 | 2,01 | 82,90 | 5,03 | 0,00 | 0,00 |
| 1.02 | 290.474 | 45,9 | 60,9 | 2,21 | 0,0* | 92,20 | 5,59 | 0,00 | 0,00 |
| 1.04 | 804 | 69,0 | 8,0 | 24,36 | 2,70 | 68,87 | 4,07 | 0,00 | 0,00 |
| 1.18 | 42.128 | 98,1 | 2,1 | 69,84 | 30,02 | 0,14 | 0,01 | 0,00 | 0,00 |
| 1.23 | 19.440 | 45,0 | 2,0 | 69,86 | 30,00 | 0,14 | 0,01 | 0,00 | 0,00 |
| 1.24 | 22.630 | 45,0 | 2,0 | 69,86 | 30,00 | 0,14 | 0,01 | 0,00 | 0,00 |
| 1.25 | 11.379 | 45,7 | 1,8 | 99,74 | 0,01 | 0,23 | 0,02 | 0,00 | 0,00 |
| 1.27 | 29.313 | 40,0 | 1,4 | 54,04 | 0,93 | 0,00 | 0,00 | 42,98 | 45,24 |
| 1.29 | 27.844 | 45,6 | 1,3 | 52,58 | 0,01 | 0,00 | 0,00 | 45,24 | 2,16 |

| | | | | | | | | | |
|---|---|---|---|---|---|---|---|---|---|
| * 3 Vol.-ppm | | | | | | | | | |

### Beispiel 2 (Vergleichsbeispiel)

Mittels des Simulationsmodells wurde ein Verfahren zur Behandlung eines H₂S und CO₂ enthaltenden Fluidstroms unter Verwendung des oben beschriebenen Absorptionsmittels untersucht. Die Pilotanlage entsprach der Fig. 2. In folgender Tabelle sind die Zusammensetzungen verschiedener trockener Fluidströme angegeben:

| # | V | T | p | CO₂ | H₂S | CH₄ | C₂H₆ | N₂ | H₂ |
|---|---|---|---|---|---|---|---|---|---|
| | [Nm³/h] | [°C] | [bar] | [Vol.-%] | [Vol.-%] | [Vol.-%] | [Vol.-%] | [Vol.-%] | [Vol.-%] |
| Z | 323.786 | 40,0 | 61,0 | 10,06 | 2,01 | 82,90 | 5,03 | 0,00 | 0,00 |
| 2.02 | 290.482 | 45,8 | 60,9 | 2,21 | 0,00* | 92,20 | 5,59 | 0,00 | 0,00 |
| 2.04 | 795 | 69,0 | 8,0 | 24,47 | 2,74 | 68,74 | 4,06 | 0,00 | 0,00 |
| 2.09 | 19.967 | 97,2 | 2,5 | 87,91 | 11,79 | 0,28 | 0,02 | 0,00 | 0,00 |
| 2.13 | 19.947 | 40,0 | 2,4 | 87,92 | 11,78 | 0,28 | 0,02 | 0,00 | 0,00 |
| 2.15 | 15.177 | 46,1 | 2,3 | 98,80 | 0,01 | 0,37 | 0,03 | 0,00 | 0,00 |
| 2.27 | 18.472 | 93,7 | 2,1 | 63,27 | 36,73 | 0,00 | 0,00 | 0,00 | 0,00 |
| 2.32 | 18.453 | 45,0 | 2,0 | 63,28 | 36,72 | 0,00 | 0,00 | 0,00 | 0,00 |
| 2.33 | 24.766 | 40,0 | 1,4 | 47,14 | 1,09 | 0,00 | 0,00 | 49,71 | 2,05 |
| 2.34 | 23.663 | 45,6 | 1,3 | 45,82 | 0,01 | 0,00 | 0,00 | 52,02 | 2,15 |

| | | | | | | | | | |
|---|---|---|---|---|---|---|---|---|---|
| * 2 Vol.-ppm | | | | | | | | | |

### Beispiel 3

Mittels des Simulationsmodells wurde ein Verfahren zur Behandlung eines H₂S und CO₂ enthaltenden Fluidstroms unter Verwendung des oben beschriebenen Absorptionsmittels untersucht. Die Pilotanlage entsprach der Fig. 3. In folgender Tabelle sind die Zusammensetzungen verschiedener trockener Fluidströme angegeben:

| # | V | T | p | CO₂ | H₂S | CH₄ | C₂H₆ | N₂ | H₂ |
|---|---|---|---|---|---|---|---|---|---|
| | [Nm³/h] | [°C] | [bar] | [Vol.-%] | [Vol.-%] | [Vol.-%] | [Vol.-%] | [Vol.-%] | [Vol.-%] |
| Z | 323.786 | 40,0 | 61,0 | 10,06 | 2,01 | 82,90 | 5,03 | 0,00 | 0,00 |
| 3.03 | 290.452 | 46,3 | 60,9 | 2,21 | 0,00* | 92,20 | 5,59 | 0,00 | 0,00 |
| 3.05 | 870 | 69,7 | 8,0 | 26,07 | 4,05 | 66,03 | 3,85 | 0,00 | 0,00 |
| 3.10 | 22.233 | 95,6 | 2,5 | 83,73 | 15,99 | 0,26 | 0,02 | 0,00 | 0,00 |
| 3.19 | 16.880 | 96,6 | 2,1 | 59,79 | 40,21 | 0,00 | 0,00 | 0,00 | 0,00 |
| 3.23 | 16.857 | 45,0 | 2,0 | 59,82 | 40,18 | 0,00 | 0,00 | 0,00 | 0,00 |
| 3.24 | 45.361 | 40,0 | 1,4 | 63,25 | 8,43 | 0,13 | 0,01 | 27,14 | 1,05 |
| 3.25 | 38.772 | 45,4 | 1,3 | 66,86 | 0,01 | 0,15 | 0,01 | 31,74 | 1,22 |

| | | | | | | | | | |
|---|---|---|---|---|---|---|---|---|---|
| * 4 Vol.-ppm | | | | | | | | | |

### Beispiel 4

Mittels des Simulationsmodells wurde ein Verfahren zur Behandlung eines H₂S und CO₂ enthaltenden Fluidstroms unter Verwendung des oben beschriebenen Absorptionsmittels untersucht. Die Pilotanlage entsprach der Fig. 4. In folgender Tabelle sind die Zusammensetzungen verschiedener trockener Fluidströme angegeben:

| # | V | T | p | CO₂ | H₂S | CH₄ | C₂H₆ | N₂ | H₂ |
|---|---|---|---|---|---|---|---|---|---|
| | [Nm³/h] | [°C] | [bar] | [Vol.-%] | [Vol.-%] | [Vol.-%] | [Vol.-%] | [Vol.-%] | [Vol.-%] |
| Z | 323.786 | 40,0 | 61,0 | 10,06 | 2,01 | 82,90 | 5,03 | 0,00 | 0,00 |
| 4.03 | 290.452 | 46,2 | 60,9 | 2,21 | 0,00* | 92,20 | 5,59 | 0,00 | 0,00 |
| 4.05 | 849 | 69,3 | 8,0 | 25,24 | 3,29 | 67,50 | 3,96 | 0,00 | 0,00 |
| 4.12 | 14.484 | 86,1 | 2,5 | 87,65 | 11,91 | 0,41 | 0,03 | 0,00 | 0,00 |
| 4.22 | 22.625 | 97,0 | 2,1 | 69,98 | 30,02 | 0,00 | 0,00 | 0,00 | 0,00 |
| 4.26 | 22.596 | 45,0 | 2,0 | 70,00 | 30,00 | 0,00 | 0,00 | 0,00 | 0,00 |
| 4.27 | 43.480 | 40,0 | 1,4 | 65,56 | 4,59 | 0,14 | 0,01 | 28,33 | 1,37 |
| 4.28 | 38.915 | 45,5 | 1,3 | 66,65 | 0,01 | 0,15 | 0,01 | 31,65 | 1,53 |

| | | | | | | | | | |
|---|---|---|---|---|---|---|---|---|---|
| * 3 Vol.-ppm | | | | | | | | | |

Für die Beispiele wurden die relative Regenerationsenergie anhand der Leistung des Aufkochers der Desorptionskolonne und die relative Gesamtumlaufrate des Waschmittels bestimmt. Unter der Gesamtumlaufrate des Waschmittels wird der jeweilige Massenstrom der Ströme 1.12, 2.22, 3.15 bzw. 4.15 verstanden.

| Beispiel | Relative Regenerationsenergie** | Relative Gesamtumlaufrate Absorptionsmittel** |
|---|---|---|
| 1* | 100% | 100% |
| 2* | 101% | 92,3% |
| 3 | 87,5% | 85,6% |
| 4 | 83,2% | 83,4% |

| | | |
|---|---|---|
| * Vergleichsbeispiel ** bezüglich Beispiel 1 | | |

Es ist ersichtlich, dass die Verfahren der Beispiele 3 und 4 eine niedrigere Regenerationsenergie und ein niedrigere Gesamtumlaufrate des Absorptionsmittels benötigen als die Verfahren der Beispiele 1 und 2.

## Patentansprüche

1. Verfahren zur Behandlung eines H₂S und CO₂ enthaltenden kohlenwasserstoffhaltigen Fluidstroms, bei dem man
a) den Fluidstrom in einem ersten Absorber (A1) bei einem Druck von 10 bis 150 bar mit einem ersten Teilstrom eines regenerierten H₂S-selektiven Absorptionsmittels behandelt, wobei man einen behandelten Fluidstrom und ein H₂S-beladenes Absorptionsmittel erhält;
b) das H₂S-beladene Absorptionsmittel durch indirekten Wärmetausch mit regeneriertem H₂S-selektiven Absorptionsmittel erwärmt;
c) das erwärmte H₂S-beladene Absorptionsmittel in einem Niederdruck-Entspannungsbehälter (LPF) auf einen Druck von 1,2 bis 10 bar entspannt; wobei man ein erstes CO₂-reiches Abgas und ein teilregeneriertes Absorptionsmittel erhält;
d) das teilregenerierte Absorptionsmittel in einer Desorptionskolonne (D) regeneriert, wobei man ein H₂S-reiches Abgas und regeneriertes Absorptionsmittel erhält;
e) das H₂S-reiche Abgas einer Claus-Einheit (CL) zuführt und das Abgas der Claus-Einheit (CL) einer Hydriereinheit (HY) zuführt, wobei man hydriertes Claus-Endgas erhält;
f) das hydrierte Claus-Endgas und das erste CO₂-reiche Abgas in einem zweiten Absorber (TGA) bei einem Druck von 1 bis 4 bar mit einem zweiten Teilstrom des regenerierten H₂S-selektiven Absorptionsmittels behandelt, wobei man ein zweites CO₂-reiches Abgas und ein zweites H₂S-beladenes Absorptionsmittel erhält; und
g) das zweite H₂S-beladene Absorptionsmittel in den ersten Absorber (A1) leitet.

2. Verfahren nach Anspruch 1, wobei man das H₂S-beladene Absorptionsmittel nach Verlassen des ersten Absorbers (A1) und vor der Entspannung im Niederdruck-Entspannungsbehälter (LPF) in einem Hochdruck-Entspannungsbehälter (HPF) auf einen Druck von 5 bis 20 bar entspannt.

3. Verfahren nach einem der Ansprüche 1 oder 2, wobei man das teilregenerierte Absorptionsmittel durch indirekten Wärmetausch mit regeneriertem H₂S-selektiven Absorptionsmittel erwärmt und ein teilweise abgekühltes regeneriertes Absorptionsmittel erhält und das teilweise abgekühlte regenerierte Absorptionsmittel verwendet, um das H₂S-beladene Absorptionsmittel durch indirekten Wärmetausch zu erwärmen.

4. Verfahren nach einem der vorhergehenden Ansprüche, wobei man das erste CO₂-reiche Abgas und das hydrierte Claus-Endgas vor der Behandlung im zweiten Absorber (TGA) einzeln oder vereinigt abkühlt.

5. Verfahren nach einem der vorhergehenden Ansprüche, wobei man das zweite H₂S-beladene Absorptionsmittel unterhalb der Zufuhrstelle des ersten Teilstroms des regenerierten H₂S-selektiven Absorptionsmittels in den ersten Absorber (A1) leitet.

6. Verfahren nach einem der vorhergehenden Ansprüche, bei dem das H₂S-selektive Absorptionsmittel eine wässrige Lösung wenigstens eines unter tertiären Aminen und sterisch gehinderten Aminen ausgewählten Amins umfasst.

7. Verfahren nach Anspruch 6, bei dem das H₂S-selektive Absorptionsmittel eine wässrige Lösung von Methyldiethanolamin umfasst.

8. Verfahren nach einem der Ansprüche 6 oder 7, wobei das Absorptionsmittel eine Säure umfasst.

9. Verfahren nach einem der vorhergehenden Ansprüche, wobei im Fluidstrom ein H₂S-Partialdruck von mindestens 0,1 bar und ein CO₂-Partialdruck von mindestens 0,2 bar vorliegt.

10. Verfahren nach einem der vorhergehenden Ansprüche, wobei das hydrierte Claus-Endgas 0,5 bis 5 Vol.-% H₂S enthält.

11. Anlage zur Durchführung des Verfahrens nach einem der vorhergehenden Ansprüche, umfassend
a) einen ersten Absorber (A1), der über einen ersten Wärmetauscher (3.07, 4.07) flüssigkeitsleitend mit einer Desorptionskolonne (D) verbunden ist, um einen ersten Teilstrom eines regenerierten H₂S-selektiven Absorptionsmittels aus der Desorptionskolonne (D) aufzunehmen,
wobei der erste Absorber (A1) ausgebildet ist, die Absorption von H₂S und CO₂ aus dem Fluidstrom in den ersten Teilstrom des regenerierten H₂S-selektiven Absorptionsmittels bei einem Druck von 10 bis 150 bar zu begünstigen, wobei man einen behandelten Fluidstrom und ein H₂S-beladenes Absorptionsmittel erhält;
und der erste Wärmetauscher (3.07, 4.07) ausgebildet ist, das H₂S-beladene Absorptionsmittel durch indirekten Wärmetausch mit regeneriertem H₂S-selektiven Absorptionsmittel aus der Desorptionskolonne (D) zu erwärmen;
b) einen Niederdruck-Entspannungsbehälter (LPF), der flüssigkeitsleitend mit dem ersten Wärmetauscher (3.07, 4.07) verbunden ist und ausgebildet ist, das erwärmte H₂S-beladene Absorptionsmittel auf einen Druck von 1,2 bis 10 bar zu entspannen; wobei man ein erstes CO₂-reiches Abgas und ein teilregeneriertes Absorptionsmittel erhält;
c) eine Leitung (3.11, 4.14), die das teilregenerierte Absorptionsmittel in die Desorptionskolonne (D) leitet, wobei man ein H₂S-reiches Abgas und regeneriertes Absorptionsmittel erhält;
d) eine Claus-Einheit (CL), die das H₂S-reiche Abgas aufnimmt, und eine Hydriereinheit (HY), die das Abgas der Claus-Einheit (CL) aufnimmt, wobei man hydriertes Claus-Endgas erhält;
e) einen zweiten Absorber (TGA), der flüssigkeitsleitend mit der Desorptionskolonne (D) verbunden ist und ausgebildet ist, die Absorption von H₂S aus dem hydrierten Claus-Endgas und dem ersten CO₂-reichen Abgas in einen zweiten Teilstrom des regenerierten H₂S-selektiven Absorptionsmittels bei einem Druck von 1 bis 4 bar zu begünstigen, wobei man ein zweites CO₂-reiches Abgas und ein zweites H₂S-beladenes Absorptionsmittel erhält;
f) eine Leitung (3.02, 4.02), die das zweite H₂S-beladene Absorptionsmittel in den ersten Absorber (A1) leitet.

12. Anlage nach Anspruch 11, außerdem umfassend einen Hochdruck-Entspannungsbehälter (HPF), der ausgebildet ist, das H₂S-beladene Absorptionsmittel aus dem ersten Absorber zu entspannen.

13. Anlage nach Anspruch 11 oder 12, außerdem umfassend einen Kühler (3.16, 4.19), der ausgebildet ist, das vom ersten Wärmetauscher (3.07, 4.07) kommende regenerierte H₂S-selektive Absorptionsmittel zu kühlen.

14. Anlage nach einem der Ansprüche 11 bis 13, wobei der Niederdruck-Entspannungsbehälter (LPF) über einen zweiten Wärmetauscher (4.09) flüssigkeitsleitend mit der Desorptionskolonne (D) verbunden ist, und der zweite Wärmetauscher (4.09) ausgebildet ist, das teilregenerierte Absorptionsmittel durch indirekten Wärmetausch mit dem regeneriertem H₂S-selektiven Absorptionsmittel zu erwärmen.

## Claims

1. A process for treating an H₂S- and CO₂-comprising hydrocarbonaceous fluid stream, in which
a) the fluid stream is treated in a first absorber (A1) at a pressure of 10 to 150 bar with a first substream of a regenerated H₂S-selective absorbent to obtain a treated fluid stream and an H₂S-laden absorbent;
b) the H₂S-laden absorbent is heated by indirect heat exchange with regenerated H₂S-selective absorbent;
c) the heated H₂S-laden absorbent is decompressed to a pressure of 1.2 to 10 bar in a low-pressure decompression vessel (LPF) to obtain a first CO₂-rich offgas and a partly regenerated absorbent;
d) the partly regenerated absorbent is regenerated in a desorption column (D) to obtain an H₂S-rich offgas and regenerated absorbent;
e) the H₂S-rich offgas is fed to a Claus unit (CL) and the offgas from the Claus unit (CL) is fed to a hydrogenation unit (HY) to obtain hydrogenated Claus tail gas;
f) the hydrogenated Claus tail gas and the first CO₂-rich offgas are treated in a second absorber (TGA) at a pressure of 1 to 4 bar with a second substream of the regenerated H₂S-selective absorbent to obtain a second CO₂-rich offgas and a second H₂S-laden absorbent; and
g) the second H₂S-laden absorbent is guided into the first absorber (A1).

2. The process according to claim 1, wherein the H₂S-laden absorbent is decompressed in a high-pressure decompression vessel (HPF) to a pressure of 5 to 20 bar after leaving the first absorber (A1) and before the decompression in the low-pressure decompression vessel (LPF).

3. The process according to either of claims 1 and 2, wherein the partly regenerated absorbent is heated by indirect heat exchange with regenerated H₂S-selective absorbent and a partly cooled regenerated absorbent is obtained and the partly cooled regenerated absorbent is used to heat the H₂S-laden absorbent by indirect heat exchange.

4. The process according to any of the preceding claims, wherein the first CO₂-rich offgas and the hydrogenated Claus tail gas are cooled individually or in combination before the treatment in the second absorber (TGA).

5. The process according to any of the preceding claims, wherein the second H₂S-laden absorbent is guided into the first absorber (A1) below the feed point for the first substream of the regenerated H₂S-selective absorbent.

6. The process according to any of the preceding claims, in which the H₂S-selective absorbent comprises an aqueous solution of at least one amine selected from tertiary amines and sterically hindered amines.

7. The process according to claim 6, in which the H₂S-selective absorbent comprises an aqueous solution of methyldiethanolamine.

8. The process according to either of claims 6 and 7, wherein the absorbent comprises an acid.

9. The process according to any of the preceding claims, wherein there is a partial H₂S pressure of at least 0.1 bar and a partial CO₂ pressure of at least 0.2 bar in the fluid stream.

10. The process according to any of the preceding claims, wherein the hydrogenated Claus tail gas comprises 0.5% to 5% by volume of H₂S.

11. A plant for conducting the process according to any of the preceding claims, comprising
a) a first absorber (A1) connected via a first heat exchanger (3.07, 4.07) in a fluid-conducting manner to a desorption column (D), in order to accept a first substream of a regenerated H₂S-selective absorbent from the desorption column (D),
the first absorber (A1) being designed to promote the absorption of H₂S and CO₂ from the fluid stream into the first substream of the regenerated H₂S-selective absorbent at a pressure of 10 to 150 bar to obtain a treated fluid stream and an H₂S-laden absorbent;
and the first heat exchanger (3.07, 4.07) being designed to heat the H₂S-laden absorbent by indirect heat exchange with regenerated H₂S-selective absorbent from the desorption column (D) ;
b) a low-pressure decompression vessel (LPF) which is connected in a fluid-conducting manner to the first heat exchanger (3.07, 4.07) and is designed to decompress the heated H₂S-laden absorbent at a pressure of 1.2 to 10 bar to obtain a first CO₂-rich offgas and a partly regenerated absorbent;
c) a line (3.11, 4.14) which guides the partly regenerated absorbent into the desorption column (D) to obtain an H₂S-rich offgas and regenerated absorbent;
d) a Claus unit (CL) which accepts the H₂S-rich offgas, and a hydrogenation unit (HY) which accepts the offgas from the Claus unit (CL) to obtain hydrogenated Claus tail gas;
e) a second absorber (TGA) which is connected in a fluid-conducting manner to the desorption column (D) and is designed to promote the absorption of H₂S from the hydrogenated Claus tail gas and the first CO₂-rich offgas into a second substream of the regenerated H₂S-selective absorbent at a pressure of 1 to 4 bar to obtain a second CO₂-rich offgas and a second H₂S-laden absorbent;
f) a line (3.02, 4.02) which guides the second H₂S-laden absorbent into the first absorber (A1).

12. The plant according to claim 11, also comprising a high-pressure decompression vessel (HPF) which is designed to decompress the H₂S-laden absorbent from the first absorber.

13. The plant according to claim 11 or 12, also comprising a cooler (3.16, 4.19) designed to cool the regenerated H₂S-selective absorbent coming from the first heat exchanger (3.07, 4.07).

14. The plant according to any of claims 11 to 13, wherein the low-pressure decompression vessel (LPF) is connected via a second heat exchanger (4.09) in a fluid-conducting manner to the desorption column (D), and the second heat exchanger (4.09) is designed to heat the partly regenerated absorbent by indirect heat exchange with the regenerated H₂S-selective absorbent.

## Revendications

1. Procédé de traitement d'un courant fluide contenant des hydrocarbures qui contient de l'H₂S et du CO₂, selon lequel
a) le courant fluide est traité dans un premier absorbeur (A1) à une pression de 10 à 150 bar avec un premier courant partiel d'un agent d'absorption sélectif pour H₂S régénéré, un courant fluide traité et un agent d'absorption chargé avec H₂S étant obtenus ;
b) l'agent d'absorption chargé avec H₂S est chauffé par échange de chaleur indirect avec l'agent d'absorption sélectif pour H₂S régénéré ;
c) l'agent d'absorption chargé avec H₂S chauffé est détendu dans un contenant de détente à basse pression (LPF) à une pression de 1,2 à 10 bar ; un premier gaz d'échappement riche en CO₂ et un agent d'absorption partiellement régénéré étant obtenus ;
d) l'agent d'absorption partiellement régénéré est régénéré dans une colonne de désorption (D), un gaz d'échappement riche en H₂S et un agent d'absorption régénéré étant obtenus ;
e) le gaz d'échappement riche en H₂S est introduit dans une unité de Claus (CL) et le gaz d'échappement de l'unité de Claus (CL) est introduit dans une unité d'hydrogénation (HY), un gaz final de Claus hydrogéné étant obtenu ;
f) le gaz final de Claus hydrogéné et le premier gaz d'échappement riche en CO₂ sont traités dans un deuxième absorbeur (TGA) à une pression de 1 à 4 bar avec un deuxième courant partiel de l'agent d'absorption sélectif pour H₂S régénéré, un deuxième gaz d'échappement riche en CO₂ et un deuxième agent d'absorption chargé avec H₂S étant obtenus ; et
g) le deuxième agent d'absorption chargé avec H₂S est conduit dans le premier absorbeur (A1).

2. Procédé selon la revendication 1, dans lequel l'agent d'absorption chargé avec H₂S est détendu à une pression de 5 à 20 bar dans un contenant de détente à haute pression (HPF) après la sortie du premier absorbeur (A1) et avant la détente dans le contenant de détente à basse pression (LPF).

3. Procédé selon l'une quelconque des revendications 1 ou 2, dans lequel l'agent d'absorption partiellement régénéré est chauffé par échange de chaleur indirect avec l'agent d'absorption sélectif pour H₂S régénéré, et un agent d'absorption régénéré partiellement refroidi est obtenu, et l'agent d'absorption régénéré partiellement refroidi est utilisé pour chauffer l'agent d'absorption chargé avec H₂S par échange de chaleur indirect.

4. Procédé selon l'une quelconque des revendications précédentes, dans lequel le premier gaz d'échappement riche en CO₂ et le gaz final de Claus hydrogéné sont refroidis individuellement ou ensemble avant le traitement dans le deuxième absorbeur (TGA).

5. Procédé selon l'une quelconque des revendications précédentes, dans lequel le deuxième agent d'absorption chargé avec H₂S est conduit dans le premier absorbeur (A1) en dessous de l'emplacement d'introduction du premier courant partiel de l'agent d'absorption sélectif pour H₂S régénéré.

6. Procédé selon l'une quelconque des revendications précédentes, dans lequel l'agent d'absorption sélectif pour H₂S comprend une solution aqueuse d'au moins une aminé choisie parmi les aminés tertiaires et les aminés à encombrement stérique.

7. Procédé selon la revendication 6, dans lequel l'agent d'absorption sélectif pour H₂S comprend une solution aqueuse de méthyldiéthanolamine.

8. Procédé selon l'une quelconque des revendications 6 ou 7, dans lequel l'agent d'absorption comprend un acide.

9. Procédé selon l'une quelconque des revendications précédentes, dans lequel une pression partielle d'H₂S d'au moins 0,1 bar et une pression partielle de CO₂ d'au moins 0,2 bar sont présentes dans le courant fluide.

10. Procédé selon l'une quelconque des revendications précédentes, dans lequel le gaz final de Claus hydrogéné contient 0,5 à 5 % en volume d'H₂S.

11. Unité pour la réalisation du procédé selon l'une quelconque des revendications précédentes, comprenant :
a) un premier absorbeur (A1), qui est raccordé par le biais d'un premier échangeur de chaleur (3.07, 4.07) pour la conduction de liquides avec une colonne de désorption (D), afin de recevoir un premier courant partiel d'un agent d'absorption sélectif pour H₂S régénéré issu de la colonne de désorption (D),
le premier absorbeur (A1) étant configuré pour favoriser l'absorption d'H₂S et de CO₂ à partir du courant fluide dans le premier courant partiel de l'agent d'absorption sélectif pour H₂S régénéré à une pression de 10 à 150 bar, un courant fluide traité et un agent d'absorption chargé avec H₂S étant obtenus ;
et le premier échangeur de chaleur (3.07, 4.07) étant configuré pour chauffer l'agent d'absorption chargé avec H₂S par échange de chaleur indirect avec l'agent d'absorption sélectif pour H₂S régénéré issu de la colonne de désorption (D) ;
b) un contenant de détente à basse pression (LPF), qui est raccordé pour la conduction de liquides avec le premier échangeur de chaleur (3.07, 4.07) et qui est configuré pour détendre l'agent d'absorption chargé avec H₂S chauffé à une pression de 1,2 à 10 bar ; un premier gaz d'échappement riche en CO₂ et un agent d'absorption partiellement régénéré étant obtenus ;
c) une conduite (3.11, 4.14), qui conduit l'agent d'absorption partiellement régénéré dans la colonne de désorption (D), un gaz d'échappement riche en H₂S et un agent d'absorption régénéré étant obtenus ;
d) une unité de Claus (CL), qui reçoit le gaz d'échappement riche en H₂S, et une unité d'hydrogénation (HY), qui reçoit le gaz d'échappement de l'unité de Claus (CL), un gaz final de Claus hydrogéné étant obtenu ;
e) un deuxième absorbeur (TGA), qui est raccordé pour la conduction de liquides avec la colonne de désorption (D) et qui est configuré pour favoriser l'absorption d'H₂S à partir du gaz final de Claus hydrogéné et du premier gaz d'échappement riche en CO₂ dans un deuxième courant partiel de l'agent d'absorption sélectif pour H₂S régénéré à une pression de 1 à 4 bar, un deuxième gaz d'échappement riche en CO₂ et un deuxième agent d'absorption chargé avec H₂S étant obtenus ;
f) une conduite (3.02, 4.02), qui conduit le deuxième agent d'absorption chargé avec H₂S dans le premier absorbeur (A1).

12. Unité selon la revendication 11, comprenant en outre un contenant de détente à haute pression (HPF), qui est configuré pour détendre l'agent d'absorption chargé avec H₂S issu du premier absorbeur.

13. Unité selon la revendication 11 ou 12, comprenant en outre un refroidisseur (3.16, 4.19), qui est configuré pour refroidir l'agent d'absorption sélectif pour H₂S régénéré provenant du premier échangeur de chaleur (3.07, 4.07).

14. Unité selon l'une quelconque des revendications 11 à 13, dans laquelle le contenant de détente à basse pression (LPF) est raccordé par le biais d'un deuxième échangeur de chaleur (4.09) pour la conduction de fluides avec la colonne de désorption (D), et le deuxième échangeur de chaleur (4.09) est configuré pour chauffer l'agent d'absorption partiellement régénéré par échange de chaleur indirect avec l'agent d'absorption sélectif pour H₂S régénéré.
